# EUROPEAN PATENT APPLICATION

(11) **EP 2 887 686 A1**
(43) Date of publication of application: **24.06.2015**
(21) Application number: 14198865.9
(22) Date of filing: 18.12.2014
(51) Int. Cl.: H04N 21/4788, H04N 21/4223, H04N 21/414, H04N 21/431, H04N 21/81

(54) **Sharing content on devices with reduced user actions**

(30) Priority: 18.12.2013 US 201361917795 P; 22.05.2014 US 201414284919
(71) Applicant: Lutebox Ltd., London EC4R 1AP (GB)
(72) Inventor: Ahmed, Syed Ali, London, SE16 2BE (GB); Shaikh, Owais, Karachi (PK)
(74) Representative: Hoffmann Eitle

(57) **Abstract**

A system, method and computer program product for sharing content, and more particularly, to a method and system for sharing images, games, and/or other types of content. In one example, the method is implemented in a computing device, and includes activating a camera directly from a messaging session on the computing device, and sending an image to one or more recipients on at least one other computer device, directly from the messaging session. The system, method and computer program product further includes a one click photo messaging and one click video messaging.

## Description

### FIELD OF THE INVENTION

The present invention generally relates to sharing content, and more particularly, to a method and system for sharing images, games, and/or other types of content with texting or other communication.

### BACKGROUND

A variety of different types of devices can generate photos and/or videos. This includes still photo cameras, video cameras, digital cameras, and other types of devices. Mobile communications devices also include the ability to take photo and/or video content. These mobile communication devices (e.g., smart-phones, hand-held gaming systems, etc.) allow a user to take photos and/or videos, save the images as well as send the images to other users. However, there is an amount of time associated with using different applications to take the images and also to send the images. This results in a number of actions required by the user before an image can be sent to another user, which can impede the user's enjoyment in sharing images and other content.

### SUMMARY

In a first aspect of the invention, a method implemented in a computing device, comprises activating a camera directly from a messaging session on the computing device, and sending an image to one or more recipients on at least one other computer device, directly from the messaging session.

In another aspect of the invention, a computer program product for sharing content, comprises a computer usable storage medium program code embodied in a storage medium. The program code is readable/executable by a computing device to: display the content on a device screen; select the content for sharing to another device, by a first action; and send the content to the another device by a second action. The sending and the sharing of the content requires no additional actions other than the first action and the second action and the displaying, selecting and sending is provided in a single application interface.

In a further aspect of the invention, a system comprises a CPU, a computer readable memory and a computer readable storage medium. Program instructions: to select a device camera for taking of an image, while within a messaging session generated by a the device camera; to select the image for sharing by using a first user action, while within the messaging session; and to send the image to another device by using a second user action, while within the messaging session, wherein: the selecting and sharing of the image requires only the first user action and the second user action while the messaging session is active and displayed, the program instructions are stored on the computer readable storage medium for execution by the CPU via the computer readable memory, and the image is displayed within the message session with text or during a chat session and which can be sent to the another device using the second user action during the messaging session.

### BRIEF DESCRIPTION OF THE SEVERAL VIEWS OF THE DRAWINGS

The present invention is described in the detailed description which follows, in reference to the noted plurality of drawings by way of non-limiting examples of exemplary embodiments of the present invention.
FIG. 1 is an illustrative environment for implementing the processes in accordance with aspects of the present invention.
FIG. 2 is an example network diagram for implementing the steps in accordance with aspects of the present invention.
FIGS. 3 and 4 show example flows in accordance with aspects of the present invention.
FIGS. 5, 6, 7A, 7B, 8A, 8B, 9A, 9B, 10-15, 16A, 16B, 17-24, 25A, 25B, and 26-29 show example screen shots in accordance with aspects of the present invention.

### DETAILED DESCRIPTION

The present invention generally relates to sharing content, and more particularly, to a method and system for sharing images, games, and/or other types of content with texting or other types of communications, e.g., videos, etc. The present invention provides an application that performs a number of capabilities to display images on a device (e.g., smart phone wearable device, etc.) as well as providing the ability to share images with other users. In embodiments, the present invention enhances the sharing ability by adding human emotion and expression to text messaging. By way of example, the present invention utilizes a minicam (or camera) for taking of photos or "selfies" which are attached to messages, e.g., text messaging. Illustrative, the present invention provides texting with selfies capability; in other words, the present invention is capable of using selfies attached to messages (text/voice/video) to add more visual expressiveness and emotion to conversations on mobile messaging.

The present invention also provides for near synchronous communication or near live communication. As should be understood by those of skill in the art, asynchronous communication includes, e.g., email, text messaging; whereas, synchronous communication includes, e.g., live phone calls, video chat, etc. Accordingly, near synchronous or live communication comprises pulling the user's interactions and communication as close to live as possible without actually being live (synchronous). In this way, the present invention is capable of achieving all the benefits of synchronous communication (e.g., human style interactions, face to face communication, expressiveness, emotiveness) without any perceived negative consequences (e.g., intrusive, high involvement, and time consuming in terms of mental and physical time commitment); while also providing the benefits of asynchronous communication (e.g., respond at any time, no pressure to reply) without any perceived negative consequences (e.g., no human emotion attached to communication, no expressiveness, etc.). This can be accomplished by putting a face (e.g., selfie) to every message, which immediately makes the conversation take on a human touch, one where social norms and social behaviors are subconsciously called upon to define the boundaries of the conversation. And, while the communication is not live, users can respond at any time, feeling no pressure to respond as with a live interaction.

In further embodiments of the present invention, the camera can also be activated directly from the chat/conversation page. So, for example, during a chat or texting session, it is now possible to activate the camera directly on the same page, without the need to launch a separate application, which is disruptive to the conversation. Accordingly, in embodiments of the present invention, the user can remain on the same page as the chat or texting session, for example, while activating the camera or minicam, thus allowing for a more seamless, spontaneous and easier manner to have both video/pictures and chatting capabilities launched on the same page. Thus, an additional benefit of the camera, e.g., minicam application, apart from attaching selfies/photos to every message (having camera activated over the chat page), it is also possible to include, a one click video messaging or video sharing as described herein. This provides benefits over other conventional applications which require, in the least, to activate a camera from another application with the requirement for multiple clicks. In this way, user actions can be reduced, while still adding human emotion and expression to text messaging, etc.

The present invention further enhances the sharing ability by reducing the number of actions needed by a user to (i) select a photo, video, and/or any other type of content; and (ii) to send the photo and/or video to another device (e.g., smart phone, wearable device, etc.) with or without content. In embodiments, the number of actions is preferably two actions, thereby providing significant improvement over known systems. The types of actions can include tapping a device display screen, swiping across the device display screen, touching the device display screen, and/or any other action taken by the user such that the interaction between the user and the device (e.g., either by touch-screen or by using a keypad on the device) results in the sharing of content.

Additionally, the user can share content by using a messaging application which is displayed along with a content display application, via a dual screen mode on the device. In further embodiments, the present invention also allows the user to share experiences, such as playing a video game, while communicating with each other via a messaging system. The messaging system and the video game may be displayed in a dual screen mode on a device. The present invention also provides the ability to use a front and rear camera of a mobile device, simultaneously.

As such the present invention (i) provides the capabilities of attaching selfies or other photos to text messaging or other communication in a near synchronous communication to provide a more immersive communication experience, e.g., add more visual expressiveness and emotion to conversations on mobile messaging; (ii) provides dual images from multiple cameras on a device at the same time; (iii) provides a dual screen display on the device that allows for images to be displayed along with a type of messaging/communications application; (iv) allows for an image displayed on the device to be sent to another device by reducing the number of clicks to send the image to the other device; (v) allows for the image to be pixilated or blocked from being viewed and only allow particular individuals to view the image on their own device (e.g., a security feature); (vi) provide a dual screen display on the device that allows for a video to be displayed along with a type of messaging/communications application; and/or (vii) allow for the user to select different images along with text, symbols, and/or other information that can be sent to other users.

As a result, the present invention allows for a wider scope of image and/or other content sharing with users of other devices. Also, the present invention allows for an improved immersive experience by using selfies attached to messages (e.g., text/voice/video) to add more visual expressiveness and emotion to conversations on mobile messaging. The present invention also reduces the number of actions needed to share content and also provides real-time interaction with other users (e.g., friends, family, etc.). Accordingly, a user can enhance their social experience (e.g., interacting with friends, co-workers, family, etc.) by using the system and processes of the present invention, which allows sharing content with less actions and time, as well as allowing the user to enhance their ability to add to the expressiveness of different moments and capture a new and unique kind of interaction with other users. Furthermore, the present invention allows for a more visual and expressive method to create a flowing visual chat that allows for sharing photos by adding a person's face to every message as well allowing a user to imbedding text into shared images. While text messages in themselves cannot express a user's emotions, e.g., angry, sarcasm, happiness, etc., the present invention provides for combined photo-texts/picture messages that add expressiveness and can show emotions within a photo along with the text message.

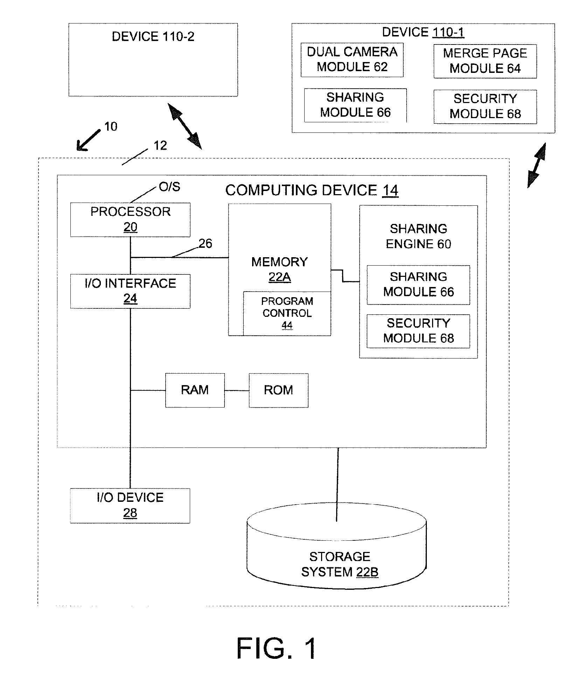

As will be appreciated by one skilled in the art, aspects of the present invention may be embodied as a system, method or computer program product. Accordingly, aspects of the present invention may take the form of a hardware embodiment, a software embodiment (including firmware, resident software, micro-code, etc.) or a combination thereof. Furthermore, aspects of the present invention may take the form of a computer program product embodied in one or more computer readable storage medium(s) having computer readable program code embodied thereon, which can be implemented in the computing device 14 of FIG. 1, as well as the devices 110-1 and 110-2, etc. In embodiments, the devices 110-1 and 110-2, can be any computing device which allows interaction including, but not limited to, a smart phone, a laptop computer, a tablet computing device, a desktop computer or any wearable device, e.g., wristband, watch, glasses, etc. The computer readable storage medium may be a computer readable storage medium and/or device (hereinafter referred to as computer readable storage medium). A computer readable storage medium does not encompass a transitory signal, and may be, for example, an electronic, magnetic, optical, electromagnetic, infrared, or semiconductor system, apparatus, or device, or any suitable combination thereof; that is, the computer readable storage medium is non-transitory, per se The computer readable storage medium can include a portable computer diskette, a hard disk, a random access memory (RAM), a read-only memory (ROM),an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible, non-transitory signal that can contain or store a program for use by or in connection with an instruction execution system, apparatus, or device.

In aspects of the invention, the systems and methods of the present invention can be implemented in a mobile communication device, e.g., smart phone, table, etc, as a mobile application implemented in such a hardware device. This will make the mobile communication device capable and operable to perform any combination of functions described herein. For example, the mobile application can allow a user to take front and rear pictures, send these pictures with text, etc., using two simple actions as described herein.

### Computing Environment

FIG. 1 shows an illustrative environment 10 for managing the processes in accordance with the invention. To this extent, environment 10 includes a server 12 or other computing system that can perform the processes described herein, and devices 110-1 and 110-2. In embodiments, devices 110-1 and/or 110-2 can be any computing device that is capable of sending any type of imagery content (e.g., photos, video, streaming multimedia information, etc.) and any other type of information, such as text messages, symbols, etc. Preferably, devices 110-1 and/or 110-2 are mobile devices which can include, for example, a smart phone or a wearable device. For example, devices 110-1 and 110-2 can be a camera, a video camera, a mobile camera, a camera within a wearable device (e.g., wristwatch, timer, eyewear, goggles, etc.) or any other type of device capable of taking images (e.g., photos and/or video content) and/or receiving other types of content and being able to share the content through various communication capabilities.

Server 12 includes a computing device 14 which can be resident on a network infrastructure or computing device of a third party service provider (any of which is generally represented in FIG. 1). The computing device 14 includes a processor 20 (e.g., CPU), memory 22A, an I/O interface 24, and a bus 26. The memory 22A can include local memory employed during actual execution of program code, bulk storage, and cache memories. In addition, the computing device includes random access memory (RAM), a read-only memory (ROM), and an operating system (O/S). The computing device 14 can include the computer readable storage medium.

The program code can be stored in the computer readable storage medium that can direct the computing device, other programmable data processing apparatus, or other devices to function in a particular manner, such that the instructions stored in the computer readable storage medium produce an article of manufacture. The computer program instructions may also be loaded onto the computing device 14, other programmable data processing apparatus, or other devices to cause a series of operational steps to be performed thereon to produce a computer implemented process for implementing the functions/acts specified in the flowcharts described herein. The computer program instructions (code) can be provided in any combination of any known languages. The computer readable storage medium is non-transitory, per se; that is, the computer readable storage medium is not a signal per se, etc. It should further be understood by those of skill in the art that computer readable storage medium can be implemented and operative on the devices 110-1 and 110-2, as the one or more modules described herein (in any combination).

The computing device 14 is in communication with external I/O device/resource 28 and storage system 22B. For example, I/O device 28 can comprise any device that enables an individual to interact with computing device 14 (e.g., user interface) or any device that enables computing device 14 to communicate with one or more other computing devices using any type of communications link.

The processor 20 executes computer program code (e.g., program control 44), which can be stored in memory 22A and/or storage system 22B. In accordance with aspects of the invention, program control 44 controls a sharing engine 60, e.g., the processes described herein. Sharing engine 60 can be implemented as one or more program code in program control 44 stored in memory 22A as separate or combined modules. Additionally, sharing engine 60 may be implemented as separate dedicated processors or a single or several processors to provide the function of these tools. While executing the computer program code, the processor 20 can read and/or write data to/from memory 22A, storage system 22B, and/or I/O interface 24. The bus 26 provides a communications link between each of the components in computing device 14.

The computing device 14 can comprise any general purpose computing article of manufacture capable of executing computer program code installed thereon (e.g., a personal computer, server, etc.). To this extent, in embodiments, the functionality provided by computing device 14 can be implemented by a computing article of manufacture that includes any combination of general and/or specific purpose hardware and/or computer program code. Similarly, server 12 is only illustrative of various types of computer infrastructures for implementing the invention. For example, server 12 comprises two or more computing devices (e.g., a server cluster) that communicate over any type of communications link to perform the processes described herein. Further, while performing the processes described herein, one or more computing devices on server 12 can communicate with one or more other computing devices external to server 12 using any type of communications link, e.g., and combination of wired and/or wireless links; any combination of one or more types of networks (e.g., the Internet, a wide area network, a local area network, a virtual private network, etc.), etc.

In embodiments, sharing engine 60 is configured to share content (e.g., photo content, video content, etc.) between two devices. Sharing engine 60 can include one or more modules, such as sharing module 66 and security module 68. As such, sharing engine 60 can, for example, communicate with device 110-1 to implement the present invention and allow a user of device 110-1 with enhanced capabilities to share content on device 110-1 with device 110-2. Thus, in embodiments, sharing engine 60 can provide a social experience application that allows sharing of many different types of content, such as, for example, photos and videos so that family and friends anywhere in the world can experience the emotion around content at the same time through their own device.

In embodiments, devices 110-1 and 110-2 can also include one or more modules (applications) used for allowing dual screen capabilities with multiple images, as well as images with other types of applications. The modules can include a dual camera module 62, a merge page module 64, a sharing module 66, and a security module 68. While not shown in FIG. 1, device 110-2 can also include one or more of the modules shown in device 110-1 to allow the user of device 110-2 to also share content. These modules, individually, or in combination with each other, allow the user of device 110-1 or 110-2 to initiate sharing capabilities with minimal or reduced user actions, such as a clicking action and a swiping action. Other actions include a pressing down action, and/or any other action where the user touches a touch screen on a device or interacts with the device by other processes (e.g., voice commands), as described herein.

More specifically, one or more of the modules on devices 110-1 and 110-2 is operative to permit a number of capabilities to display images on the device, as well as provide the ability to share images with other users during a chat or text messaging session. In embodiments, the one or more of the modules, for example, can be provided in hardware or implemented as a computer program product, e.g., computer readable storage medium, which allows the utilization of a minicam (or camera) for taking of photos or "selfies" which are attached to messages, e.g., text messaging. Illustrative, the application is operative to provide texting with selfies capability; in other words, the present invention is capable of using selfies attached to messages (text/voice/video) to add more visual expressiveness and emotion to conversations on mobile messaging.

The application is also operative to provide near synchronous communication or near live communication, as described herein. For example, using a camera function, it is possible to put a face (e.g., selfie) to every message, which immediately makes the conversation take on a human touch, one where social norms and social behaviors are subconsciously called upon to define the boundaries of the conversation. Advantageously, the application also provides the capability of activating the camera directly from a chat/conversation page. So, for example, during a chat or texting session, it is now possible to activate the camera directly on the same page, without the need to launch a separate application, which is disruptive to the conversation. This provides benefits over other conventional applications which require, in the least, to activate a camera from another application with the requirement for multiple clicks. In this way, user actions can be reduced, while still adding human emotion and expression to text messaging, etc.

Thus, in embodiments, different users using different devices, such as device 110-1 and 110-2, can view photos, watch videos, while group video-chatting or texting, for example. Accordingly, the present invention allows different users to share albums (e.g. a set of photos and/or videos) with other users while chatting (e.g., text, audio, video, etc.). In embodiments, the messaging application can be a separate application than the photo and/or video content application which allows for users to switch between albums, pictures, chatting, and/or playing video games, in real time. In embodiments, the messaging application and another application, e.g., photo application, can be part of the same application, or separate applications, with the sharing of content being provided by two user actions, e.g., tap and swipe.

### Dual Camera Capability

In embodiments, dual camera module 62 allows device 110-1 (or device 110-2) to activate multiple cameras on a device at the same time, directly from the chat session, e.g., texting session (without launching a separate application). For example, device 110-1 may have a camera that points outwards (first direction) and another camera that points towards the direction of the user (second direction). However, any number of cameras may point in any direction, implementing the processes of the invention. Dual camera module 62 allows a user of a device to activate between cameras, and can be activated on turn-on by an action (e.g., a click, tap, swipe, etc., to select a camera application). This allows the user to see images from different device cameras at the same time. Alternatively, dual camera module 62 may automatically activate upon the user activating the device (e.g., upon powering up the device, waking the device up from a sleep mode). Thus, when the user selects a camera application (e.g., selects an icon for initiating the device camera), the user can see, on the device, multiple images from different device cameras on a single split screen.

In embodiments, the dual camera mode can be implemented by simultaneous driver calls created within an AV Foundation, which is a framework that can be used to create audiovisual media while in the chat session. In embodiments, the AV Foundation provides an Objective-C interface that allows for creating applications that allow for examining, creating, editing, or re-encoding media files. In embodiments, the AV Foundation can be used with different operating systems associated with different devices, such as mobile phone operating systems, computer operating systems, etc.

Within the AV Foundation, libraries can be created for different types of modules, code, and/or applications. In embodiments, the AV Foundation can create a library for one driver call associated with UI Image (or UIImage) objects and another driver call associated with a view controller. In embodiments, the UI Image object can be a way to display image data and thus allow for creating images from files. Accordingly, the UI Image object offers different options as far as specifying properties for the image, while being launched directly from the chat session (from the same page as the chat session). UI Image object can use different file formats, such as tagged image file format (TIFF), joint photographic experts group (JPG), graphic interchange format (GIF), and/or other types of formats.

In embodiments, the view controller is a link between an application's data and the associated visual appearance. Thus, view controllers provide a framework to create and build applications for mobile devices, such as smart phones. In embodiments, the view controller can be used to manage views, manage content, displaying content, and creating hierarchies with multiple view controllers.

In embodiments, dual camera module 62 creates two instances by using the UI Image and the view controller. Thus, both of these instances are saved as different driver calls within the AV Foundation library and, as such, allows dual camera module 62 to initialize all the cameras to allow for simultaneous driver calls. This results in streaming information from multiple cameras. The dual camera module 62 can also interact with other modules, such as merge page module 64, to display images from the multiple cameras on one display.

While the simultaneous driver calls are used within the context of the AV Foundation, UI Images, and view controllers, simultaneous driver calls can also be generated within the context of other types of frameworks that are associated with Java, Android based devices, and/or any other device framework application that allows for two device cameras to provide images at the same time on the same display.

In embodiments, the dual camera module 62 can create one camera image within another camera image, e.g., a mini-cam image. For example, a mini-cam image can be a smaller image provided on a larger image. Thus, by using the mini-cam feature, a front camera image can be inserted as an image within the back camera image or vice-versa. In embodiments, the size of the mini-cam image can be changed to different sizes (e.g., 20%, 40%, etc., of the actual image size) within the larger image.

In alternate embodiments, dual camera module 62 initiates multiple requests for images by sending separate driver calls to each camera. In this implementation, each driver call alternates so that images from all cameras can be implemented separately by dual camera module 62. This results in dual camera module 62 receiving images from different cameras, which can be sent to merge page module 64. Merge page module 64 merges the images onto a single display page on the device. In embodiments, the separate driver calls allow for cameras to flip back and forth between each other, thus having one camera work in a single instance. Although this may result in a lag, it will allow both cameras to work in a dual mode setting in order to record imagery in different directions with different cameras.

### Merging Information onto Single Page with Split Screen Design

In embodiments, merge page module 64 merges different images, text, and/or different applications onto a single display screen of device 110-1 (or 110-2). So, for example, it is now possible to merge text messaging or a conversation with an image, while in the same application or page (without the need to launch separate applications). Merge page module 64 acts as an interface between different applications, e.g., chat session and video or pictures, used on device 110-1. In embodiments, each application used on device 110-1 can have an icon (e.g., merge button) or another type of selector (e.g., voice command) that, when selected, allows for that application's content to be merged with another application (e.g., a photo application and a text messaging application). In embodiments, the user may be given an option regarding which applications can be selected in order to view two applications on a single display screen in a split mode or on the same page. In alternate embodiments, different applications may already share the same source (e.g., the same system) for access, security, etc. Thus, merge page module 64 may receive the information and then merge both applications onto different portions of the same display.

In embodiments, merge page module 64 can merge text or other content, e.g., video or pictures, onto a single page. In embodiments, merge page module 64 can merge text or other content onto an image displayed as a background and provide textual, video, or audio inputs as an overlay to the background. For example, merge page module 64 can provide both a background image and a text overlaid on the background. In embodiments, text alone can be sent to a recipient's device, with the image being a cloned or saved image on the recipient's device. In this embodiment, the text will then be overlaid onto the image that was saved on the 34 recipient's device. It is also possible to launch the text or other content, e.g., video or pictures, from a single page using, for example, a single click or slide action. In this way, it is possible to activate the camera of a device and send a picture and text from a same page, e.g., same application program (e.g., messaging session). There is no need to exit the messaging session, open a camera for taking of a picture or video, and then send the picture or video separate from text, or at least from a separate application (messaging session). In this way, the sending device can send the picture or video while chatting or texting on the same page. Similarly, the receiving device can receive the picture or video while chatting or texting on the same page.

Once the user selects the applications for content sharing on a single page, merge page module 64 receives content from those applications and merges them onto a single screen. For example, the single screen may have a split screen (e.g., a horizontal split screen, a vertical split screen, etc.) that shows one application (text messaging or photo) on one portion of the split screen and another application (another photo) on the other portion of the split screen.

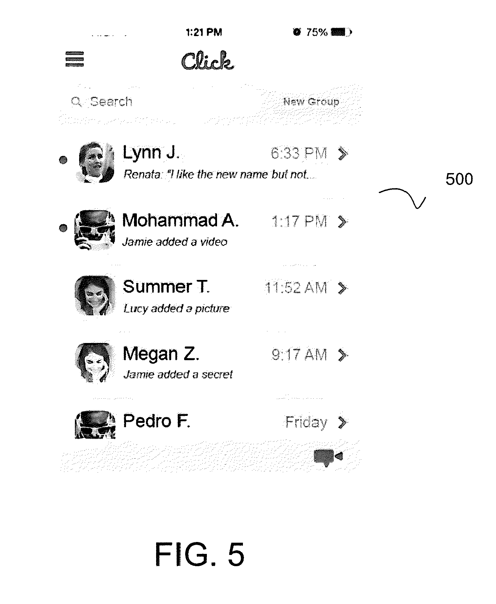

In embodiments, the content associated with an application can be stored on the device or can be stored on another device. As such, when the application on the device requests information from another device (e.g., sharing server, storage device, etc.), the other device can then send the content to the device. Once the content is received, merge page module 64 displays the content on device 110-1 in a split screen mode with other content. By way of a non-limiting example, the user can select a camera application that will allow for the camera image to be displayed on one portion of the screen. Also, the user can select a messaging application that will allow for the messaging application to be displayed on another portion of the screen. Other examples include displaying a video game application, displaying stored images/videos, and/or any other type of application. These examples are shown in FIGS. 5, 6, 7A, 7B, 8A, 8B, 9A, 9B, 10-15, 16A, 16B, 17, and/or 18, for example. By merging different content onto a single display screen, a user can now save on a number of clicks (or other actions) needed to perform sharing of content with other users.

### Sharing Content

In embodiments, sharing module 66 shares content on device 110-1 with device 110-2 or any other device. In embodiments, a user can initiate a number of actions to share content from device 110-1 with device 110-2 with a reduced number of actions, and from a same page or application (messaging session). For example, the user can tap and swipe to select and then send content to another user device for sharing of content. For example, a user can tap on device 110-1 to take a picture and then perform a swipe action across an icon or other symbol representing another user in a messaging application to send the picture to another device, while in the messaging session, e.g., chatting or texting session. Thus, sharing module 66, located on device 110-1, interfaces with the photo application, retrieves the photo, merges the photo within a message, and allows the user to send the photo by a two action method, e.g., click and swipe.

In more specific embodiments, when the image is displayed on device 110-1, sharing module 66 (sharing engine 60) can share the image with other users in a messaging conversation. In this way, the image can be shared with other users in a chatting session, while being launched from the same application (same page), with minimal clicks or user actions and without the need to launch or switch to different applications. In embodiments, sharing engine 60 can use identifiers (e.g. names, IDs, numbers, etc. of the other users) to send the image to the other devices (e.g., device 110-2) either separate from the text/video messages or in combination with the text messages. In this way, the receiving devices can receive the image with the messaging conversation on a same or separate channel.

Alternatively, sharing module 66 can receive a request to share a photo or other images within a message from another device. For example, sharing module 66 on device 110-1 can send a message along with a tag instructing another device to retrieve a photo and attach the photo to the message. Thus, sharing engine 60 can retrieve a photo and then attach the photo to a message sent to another user.

In further embodiments, a user can attach sound effects to content that is being shared via a messaging application. This adds to the expressiveness of the moment and also captures a new and unique type of interaction. For example, a user can share a picture of them laughing, in which scenario, the user attaches a laughing sound effect to the shared message and/or the photo. In embodiments, the message, photo, and other content can be sent to a central server, e.g., to sharing server 60, which combines the content and sends the entire content to another device. Alternatively, sharing module 66, stored by device 110-1, can combine the message, photo and other content and send the other content to the other device, through the network.

In implementations of the present invention, all the users sharing content can be provided the same level of quality (e.g., picture quality (pixel quality), video quality based on bits per second, etc.) at the same time. This is possible by sending the content to a computing environment such that the exact same quality content can be called to each user device. In embodiments, a cloud computing environment can include one or more servers, located remotely from device 110-1, which stores different content accessible by any device. In such a scenario, the user can decide to share that content with other users of other devices, such as device 110-2.

### Security Features

In embodiments, security module 68 allows for a user to implement security features for different types of content. In this way, only particular users can see or receive the content. For example, content on device 110-1 may have an icon or symbol that when selected results in the content becoming pixilated. This pixilated content can only be un-pixilated by another user of another device (e.g., device 110-2) upon receipt of the content. This can be accomplished by either providing permissions or passwords, or through the selection of a specific authorized recipient. This allows for users to send private content (e.g., photos) while still retaining their display capabilities.

In embodiments, the secure message can be revealed by using a password, providing a particular audio phrase, using a particular hand gesture on a touch-screen display for a device, and/or any other type of password. Thus, the content will be unavailable to users who are not provided permission to view the content. In further embodiments, the user can determine a time period that another user can view the secure content. For example, the user may input security information into device 110-1 that instructs security module 68 to pixilate an image and only allow another user to view that message for a set amount of time (e.g., the next 12 hours). The secure message (content) can be saved on either the sending or receiving device, or a central server. The secure content cannot be unpixilated by an authorized user, though.

### Additional Control and Sharing Features

In embodiments, when the invention is implemented in a central server configuration, control functionality for implementing the present invention can be via sessions. A session can be created at run time and a host (e.g., the person who initiates the session) can be identified via a user identification (ID) by sharing engine 60, for example. Additionally, the session can have its own identifier (e.g., numerical, name, etc.) that can restrict the individuals who can join the session. In embodiments, only the initiating user (e.g. the user of device 110-1) can be provided with the permission to navigate amongst different views, content, e.g., photos, videos, etc., inviting other users, and other controls. In embodiments, multiple session files are called at different instances for a value of change, which then results in a change in the value. That is, there is a single file which is shared between multiple users, however, when another session is started, based on the fields in the database, all the values can be manipulated by different users. Thus, it is possible to provide real-time photo or video game sharing and group chatting at the same time as well as on the same screen.

By way of an example, device 110-1 sends a request to sharing engine 60 to initiate a session. The session can include, for example, directing device 110-1 to a uniform resource locator (URL). The URL can be associated with any type of application (e.g. a photo storage application). Prior to sharing data with others, in embodiments, sharing engine 60 can create a unique user ID and group ID for this session which will be shared with other devices, such as device 110-2. That is, in implementations, sharing engine 60 can create the user ID for that session which can be associated with invites to other devices from device 110-1. The shared resource files given the ID are called during the course of the stream/sharing experience, i.e., the session. The ID of the session is host related and can be randomly generated so individuals cannot join without permissions. Instead, the initiating user can invite the users to attend, using the session User ID. In alternate embodiments, the generated IDs may be sent to messaging and/or gaming application servers that then send their content along with a tag or identifier which is used by sharing server 60 to create a session that combines different applications together.

Upon connection, the other users can view and/or access the same content as the user of device 110-1, e.g., a video game, a messaging/texting application and photos which were downloaded from an originating device. However, the user of device 110-1, with the unique user ID, remains in control of the content and/or other shared content, i.e., controls the session. To establish another session, or show other session files, e.g., navigating between videos, photos, etc., the systems and processes of the present invention will provide another unique ID and group ID for such a session. The user ID will be particular to the host; whereas, the group ID will be particular to the invited participants.

In embodiments, sharing engine 60 can obtain shared data from a database (e.g., storage system 22B) or other shared data over a networking environment. The shared data can be shared or obtained from other URLs, with specific group and user IDs, in addition to other parameters, such as security. In embodiments, shared data can access other collection areas that remain secure, via other user IDs, group IDs, or other parameters. For example, using layers of security, each user has access only to their own collection area, but these collections can be shared.

More specifically, the underlying control functionality, via one or more modules stored by device 110-1 and/or sharing engine 60, is provided in such a way that sessions are created and certain part of the code is retained in a shared space, accessing locations and timers. For example, each user connects with the same file with ID assigned, which calls a resource file which is writeable by the host and viewable by the user. Hence all the changes on the file are automatically updated for the remaining users. In embodiments, the different points are retained in the shared space such as seek location, pause (binary), play (binary), volume level, and/or mute (binary).

In embodiments, timers are the seek points in a video and for refresh rates. The timing is subject to each video and also the timers are controlled by the host. The timers are not accessed but are set for refreshing in order to access the shared files. The timers are altered based on the functionality as per the requirement of a session. For optimization, the number of users can be restricted at a time for the video conference, however, the number can be increased based on bandwidth availability.

For pictures (and videos and other types of multimedia), the instance is called on the basis of a time lapse which becomes negligible and the information is only read on the basis of change, hence not on preloading or unnecessary bandwidth consumption. That means as the images do not have a timeline and do not require to sync up during the viewing of a single picture (which can be any content) and only require change as and when the change is made by the host.

Thus, the underlying control functionality of the present invention is capable of allowing users to view the same quality photo, video, and/or any other type of content. This can be done as the content is loaded via the same source (i.e., the present invention knows the specific location of the content as it is stored in the "cloud," e.g., server 14 or computing device 14 (compared to conventional systems which rely on digitally deteriorated copies), hence the quality is not affected. As photos are still frames, the picture will load and the imaged loaded will have the same quality.

In further embodiments, a profile area is provided where users can manage their favorite, saved, and uploaded content, including albums. This profile area can be provided as an interactive interface with content stored by sharing server 60 which can be accessed over a communications system (e.g., Internet, Intranet, etc.) or content stored by device 110-1. The present invention can store user data on servers (e.g. sharing server 60) and allows users to access their data (login access, saved content, applications, services, etc.) via device 110-1. In embodiments, the collection area is a part of the user's profile where he can save the content they like to be able access at a later time and share with other users.

In embodiments, the collection area can be secure. For example, the present invention has layers of security to ensure protection of user data. Accordingly, each user on their device has access only to their own collection area. If a user decides to make an album or individual photo/video public, for example, then anyone can view that content associated with the user's social connections. However, collections that are specific to a user will be accessible only by the user. The user, though, can choose to share their collection along with the actual content. Collections can also be made over content by other users, however, the owner of the content can choose to remove the content which may result in moving the content out of the user's collection. The option to retain the content will remain open.

In embodiments, one example mechanism for sharing content can be implemented through AJAX commands and can be performed through session controls which are provided to one user and given a view of another user. Thus, in embodiments, the present invention also provides a calling mechanism which without any additional downloads can allow a user to connect and create the session. For example, each piece of content can have a session created and viewed at the same time. Between pictures and video, a new session may be required. However, a new session may not be required when switching from one album to another or from text to photo. The content controller remains the same while the element linking remains the same. For example, each item is issued an ID and the ID is called, hence only refreshing the item in the holder.

Thus, the control functionality of the present invention, provides, advantageously the users with the ability to initiate one or two actions (e.g., clicks, taps, swipes via touch screen or keypad, etc.) to obtain content and then share the content with other users. Thus, a user can now access content or other applications with one, two, or a different quantity of actions, to access and share content.

### Network Diagram

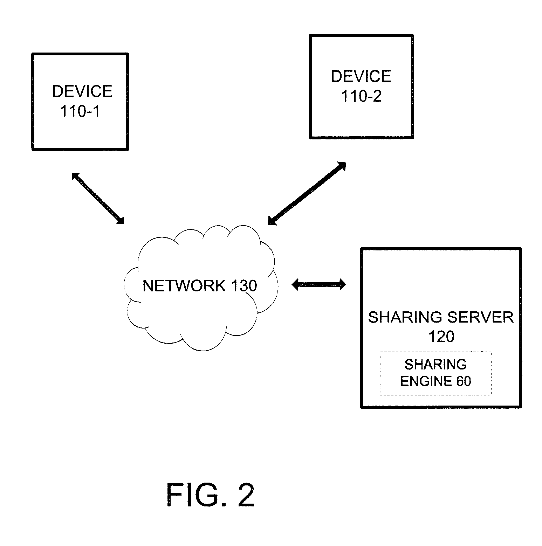

FIG. 2 shows an example network diagram in accordance with aspects of the invention. FIG. 2 shows devices 110-1, 110-2, sharing server 120, and network 130. While FIG. 2 shows a particular quantity of each type of device and/or network, there may be additional or fewer devices, engines, and/or networks.

Devices 110-1 and/or 110-2 may include any computation or communication device that is capable of communicating with a network (e.g., network 110) and thus can record, save, and send images and/or other types of information. For example, devices 110-1 and/or 110-2 can be a laptop, smart-phone, cell-phone, handheld gaming device, camera, or any other type of mobile device. In embodiments, devices 110-1, and/or 110-2 can receive and/or display content, which can include, for example, objects, data, images, audio, video, text, and/or links to files accessible via one or more networks. In embodiments, devices 110-1 and/or 110-2 can record images, such as photos, videos, multimedia images, etc., and send those images and/or other types of content to other devices, via network 130. In embodiments, the network can include sharing server 120.

Sharing server 120 may include a computation or communication device that is capable of communicating with a network (e.g., network 130) and receiving information that can be used to share content in the manner described herein. In embodiments, sharing server 120 can include sharing engine 60, as described in FIG. 1, to receive content and allow different users to share that content via the functionalities described herein.

Network 130 may include one or more networks that allow for communication between different devices (e.g., devices 110-1 and/or 110-2, sharing server 120, etc.). In embodiments, network 130 can comprise an Internet, Intranet, local area network (LAN), wide area network (WAN), a GPS network, radio access network, a wireless fidelity (Wi-Fi) network, a Worldwide Interoperability for Microwave Access (WiMAX) network, a cellular network, and/or a combination of these or other networks.

### Flow Diagrams

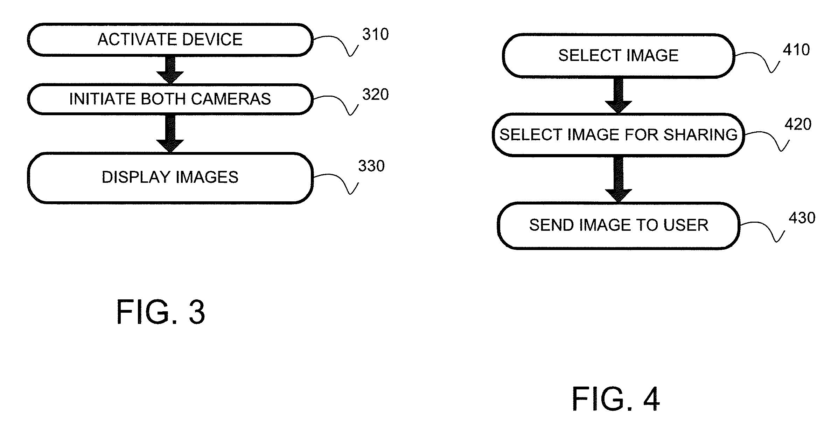

FIGS. 3-4 show exemplary flows for performing aspects of the present invention. The steps of FIGS. 3-4 may be implemented in the environment of FIG. 1 and/or FIG. 2, for example. The flowcharts illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). The flowcharts can be implemented by special purpose hardware-based systems that perform the specified functions or acts, or combinations of special purpose hardware and computer instructions, and can be implemented on the computer readable storage medium.

FIG. 3 shows an example flow for initiating two or more cameras on a device, e.g., device cameras, such that images from multiple device cameras can be displayed at the same time on the device screen, in accordance with aspects of the present invention. At step 310, device receives an activation request from a user. The device can be activated by turning on the device. At step 320, device receives a request to initiate an application associated with one or more cameras that are part of the device, which can be provided during a chat session (on a same page of the messaging session (which can be a chat or text session, etc.). In embodiments, the user can select (e.g., via touching a screen, using a keypad, etc.) a photo/video application that initiates one or more device cameras directly from the chat session (without the need to launch a separate application outside of the messaging session). Upon initiating the photo/video application, the user can also select the number of cameras. In embodiments, the photo/video application can, based on user preferences, select whether the front and/or back camera will display mini-cam images.

For example, a default setting may be a camera that faces away from the user or alternatively, the default setting may be a camera facing the user (e.g., for taking selfies). Regardless of the default setting, the user can override the default setting by selecting a dual mode setting. In the dual mode setting, both cameras can be activated at the same time. The photos or video can be displayed on the same display screen, at step 330. In embodiments, the images from multiple cameras can be displayed in a split screen mode. Thus, for example, an image from the camera facing the user is shown on a top portion of the screen and an image from the camera facing away from the user is shown on a bottom portion of the screen. The split screen can, alternatively, show images from different cameras side by side on the same screen.

FIG. 4 shows an example flow for sharing content between devices in accordance with aspects of the present invention. At step 410, a device can receive a request from a user to retrieve an image and/or any other type of content. In embodiments, the request may result in the device retrieving content stored by the device, or the request may result in the device sending a request to retrieve content stored on another storage device, via a communications network (e.g., Intranet, Internet, etc.) or by taking a photo or video. Once the content is received, e.g., a photo, the device can display the content on its display screen.

At step 420, the device can receive a request from the user to select the image for sharing. In embodiments, the user can select the image by pressing down on the image, tapping the image, swiping the image, or any other single action that results in selecting the image for sharing, while in a messaging session. The device may, as a result of the user's request, display the image along with another application (e.g., messaging application (which can be a chat or text session, for example) on the same screen.

At step 430, the device receives a request from the user to send the shared image to another user. In embodiments, the request can be a single action, e.g., swipe, performed by the user that initiates sending of the shared image. For example, the action could be swiping across an icon, symbol, or name that is within the messaging application and that is associated with the other user or users. Thus, with a single user initiated action, the device sends the image to the other user.

In embodiments, the user can initiate other actions relating to the image. For example, the user can select a security feature to blur or pixilate the image, so that only select recipients of a texting/messaging application can see the image. This can be provided directly in the messaging session. The images may be unpixilated by use of permissions or passwords. Without permission, users would see a blurred image on their device display. If the user selects to share the image with another user, the image is sent with the message. The user can receive either (i) a clear unpixilated image or (ii) a blurred/pixilated image that his then made clear by the other user providing some action, e.g., the user can touch the screen, (e.g. once, twice, etc.), enter a password, and/or any other type of action that changes the blurred image to a clear image.

FIGS. 5, 6, 7A, 7B, 8A, 8B, 9A, 9B, 10-15, 16A, 16B, 17-24, 25A, 25B, and 26 are example displays in accordance with aspects of the present invention. In embodiments, the example displays illustrate the various user capabilities and functions of the present invention in order to enhance the user's experience as described herein. The example displays illustrate certain user actions and displays, e.g., the ability to touch, swipe, tap, and/or perform any other type of action while remaining within messaging session (e.g., chat or text). In embodiments, the user may determine: (i) image size; (ii) a split screen configurations; (iii) security features; and/or (iv) types of content sharing, e.g., how the content is to be displayed. Accordingly, the user can change one or more of the user selection abilities without minimizing the ability of the present invention to allow sharing of content with two actions or less by the user.

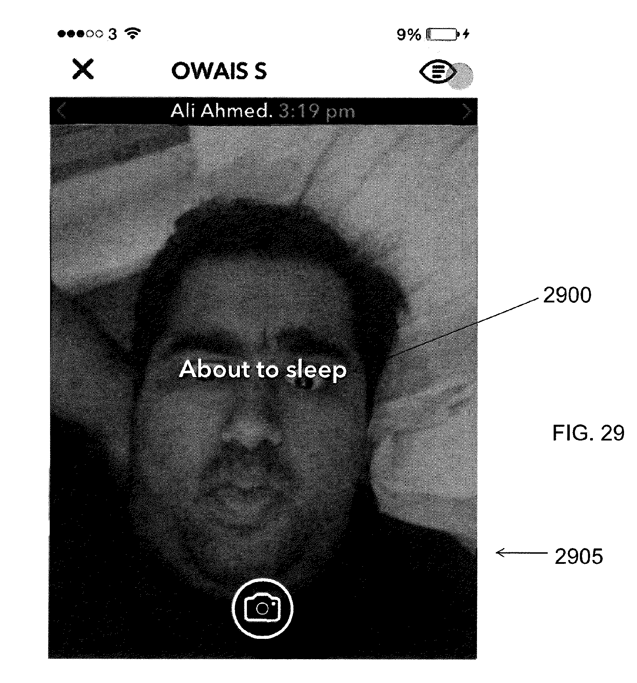

It should be understood that the representations of FIGS. 5, 6, 7A, 7B, 8A, 8B, 9A, 9B, 10-15, 16A, 16B, 17-24, 25A, 25B, and 26-29 provide functionality of the messaging application of the present invention and, accordingly, are representative of computer system-executable instructions, such as program modules, being executed by a computer system. Generally, the program modules may include routines, programs, objects, components, logic, data structures, and so on that perform particular tasks or implement particular abstract data types, any of which can be run on a computer device 14 or server 12 shown in FIG. 1. Accordingly, each screen shot can be implemented by computer program instructions that are provided to a processor of a general purpose computer, special purpose computer, or other programmable data processing apparatus to produce a machine, such that the instructions, which execute via the processor of the computer or other programmable data processing apparatus, create means for implementing the functions/acts specified herein. These computer program instructions may be stored in a computer readable medium (non-transitory, per se) that can direct a computer or other programmable data processing apparatus, or other devices to function in a particular manner, such that the instructions stored in the computer readable medium produce an article of manufacture including instructions which implement the function/act specified in the screen shots.

It should be understood by those of skill in the art that the displays of FIGS. 5, 6, 7A, 7B, 8A, 8B, 9A, 9B, 10-15, 16A, 16B, 17-24, 25A, 25B, and 26 can illustratively represent the ability to enhance the sharing ability by adding human emotion and expression to text messaging. By way of example, the displays show the utilization of a minicam (or camera) for taking of photos or "selfies" which are attached to messages, e.g., text messaging. Illustrative, these displays are capable of displaying selfies attached to messages (text/voice/video) to add more visual expressiveness and emotion to conversations on mobile messaging. Also, these displays are illustrative of near synchronous communication or near live communication. In further embodiments of these displays are representative of launching a camera application directly from the messaging session, without the need to launch a separate application or exit the messaging session. In this way, there is no disruption to the conversation, whether within a chat session or a text session, as a picture or video can be sent directly from the messaging session (on the same page). Accordingly, from the same display, the user can (i) activate the camera or minicam, (ii) take a picture or video, and (iii) send the picture or video directly from the messaging session, thus allowing for more seamless and spontaneous capabilities launched on the same page. The additional benefit, apart from attaching selfies/photos to a message (directly from the messaging session), is also the ability of having only a single click or swipe action.

As shown in FIG. 5, display 500 includes a main page of an application implemented by the present invention. This main page allows for sharing messages, text, video, games, and/or other types of content derived from an application or received from other applications. Display 500 may appear on a display screen of a device when the user either (i) powers on the device, e.g., a home page or (ii) selects an icon or symbol shown on the device screen. In embodiments, display 500 includes a list of different users, i.e., social connections. The different users can be a part of a user's social group or network, e.g., friends, family, co-workers, etc. Display 500 includes the name of the connection and a time of the connection's last interaction with the user. For example, Lynn J. sent a message to the application at 6:33 p.m., stating "Renata: I like the new name but not..." A search field provides searching capabilities for different connections and/or groups of connections.

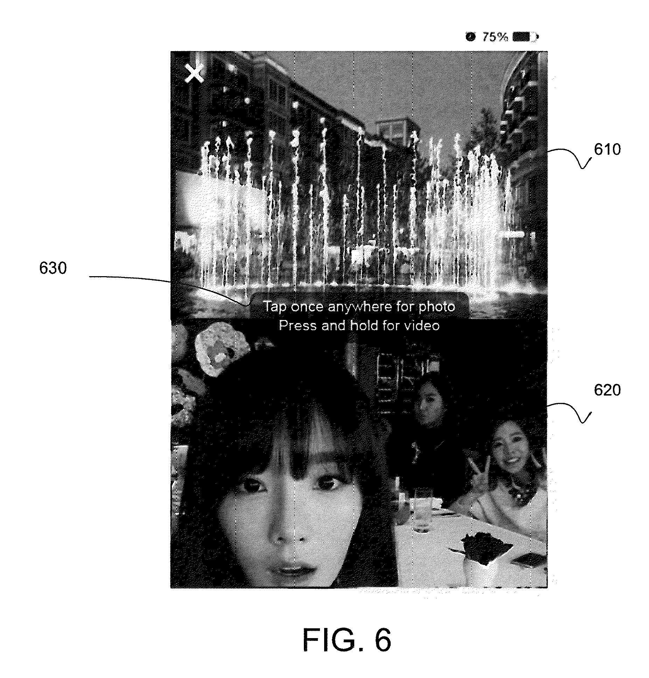

FIG. 6 shows a split mode screen shot with image 610 and image 620. In embodiments, both images 610 and 620 can be displayed at the same time using the dual camera mode. Thus, the display screen with dual images provides the user with faster decision making processes that allows the user to take self-images (selfies) 620 and other images 610 without having to switch cameras or screens.

The user of the device can use icon 630 to either take a photo or to take a video. For example, if the user taps on image 610 or image 620, then a device camera (either facing the front or back) will take a photo of image 610. Furthermore, if the user, for example, presses and holds down (e.g., pressing down with a finger) on image 610 or image 620, then the device camera (either facing the front or back) will begin to take video of that particular image. While not shown in FIG. 6, the user can be provided with additional icons providing different user options.

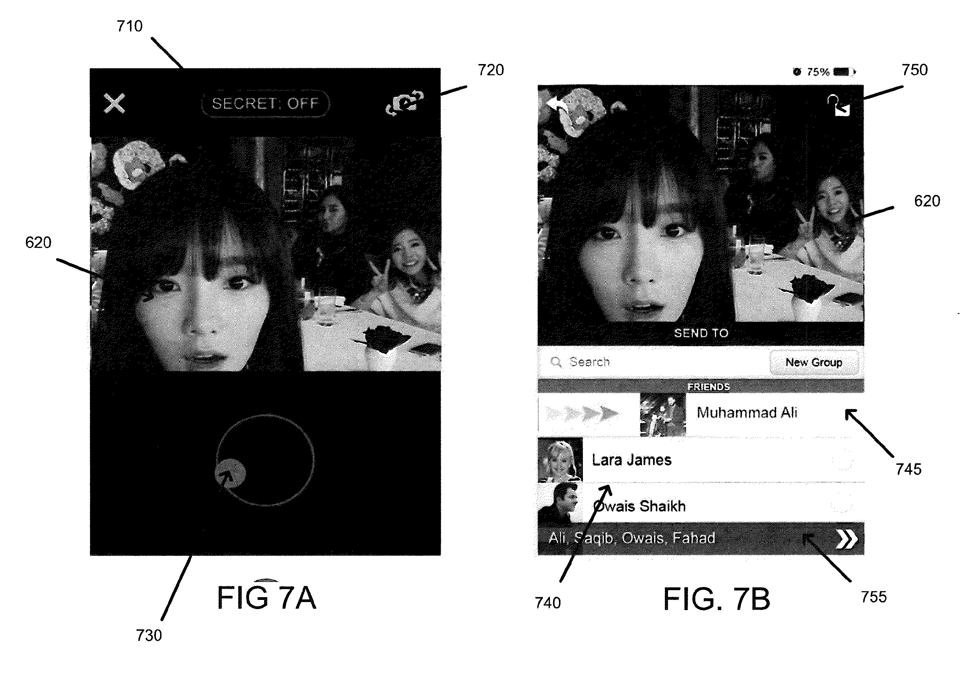

FIGS. 7A and 7B show several options for sharing images, e.g., image 620, secret selection icon 710, an image selection icon 720, and a sharing icon 730. For example, secret selection tool 710 allows the user to either share or not share the images with other users. In embodiments, image selection icon 720 allows the user to change between camera images, e.g., between front and rear facing cameras. In this way, a user can tap on a screen between different images, e.g., image 620 or image 610. By selecting sharing icon 730, a messaging application 740 appears as shown in FIG. 7B. Messaging application 740 can include one or more different social connections of the user, such as Muhammad Ali, Lara James, and Owais Shaikh.

In embodiments, the user is provided, as shown in FIG. 7B, with several options on sharing the image. As further shown in FIG. 7B, the user is provided with security icon 750. Security icon 750 allows the user to blur or pixilate (cover) the image such that certain social connections in messaging application 740 cannot see these images. The user can send the image to a particular social connection.

In embodiments, the user sends the image to a social connection 745, e.g., Muhammad Ali, by initiating a single action, e.g., swipe from left to right (or right to left). This swiping action will result in arrow symbols that indicate that image 620 is being sent to Muhammad Ali. While FIG. 7B shows a swiping feature with arrow symbols, a user can tap on the selected social connection, or perform any other single type activity to send the image to the social connection. Thus, a user with two actions (e.g., a tap and swipe) can select an image and send the image to another user. Accordingly, the number of user initiated actions (e.g., taps, clicks, swipes, etc.) to send a image to a social connection is reduced, compared to known applications. Furthermore, once an image is sent to one of the social connections, the user can be taken to a conversation page such that the user and the social connection(s) can chat via a messaging application while viewing the same photo and/or video on different devices.

FIG. 7B further shows icon 755. This icon 755 illustrates multiple social connections (Ali, Saqib, Owais, and Fahad). Icon 755 can be either used to (i) send images to a group of social connections by simply swiping on the icon; or (ii) individually bring up these group members onto the display screen.

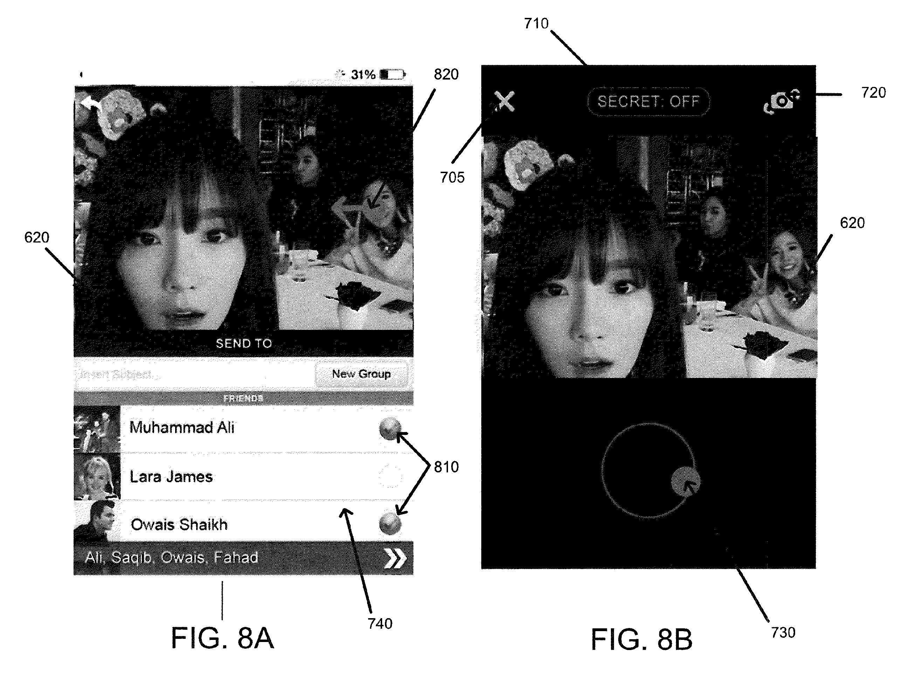

FIG. 8A shows icon 810 which indicates that image 620 has been sent to different social connections in messaging application 740. For example, Muhammad Ali and Owais Shaikh have both received image 620. Also, as shown in FIG. 8A, the user can swipe image 620 by using for example, a swipe icon 820, or swiping image 620 itself, to clear the messaging application as shown in FIG. 8B. As shown in FIG. 8B, cancel icon 705, secret selection 710, image selection icon 720 and sharing icon 730 are displayed. Thus, the user can select another image, tap on sharing icon 730 to bring up another session to share images, or select cancel icon 705 to exit the display.

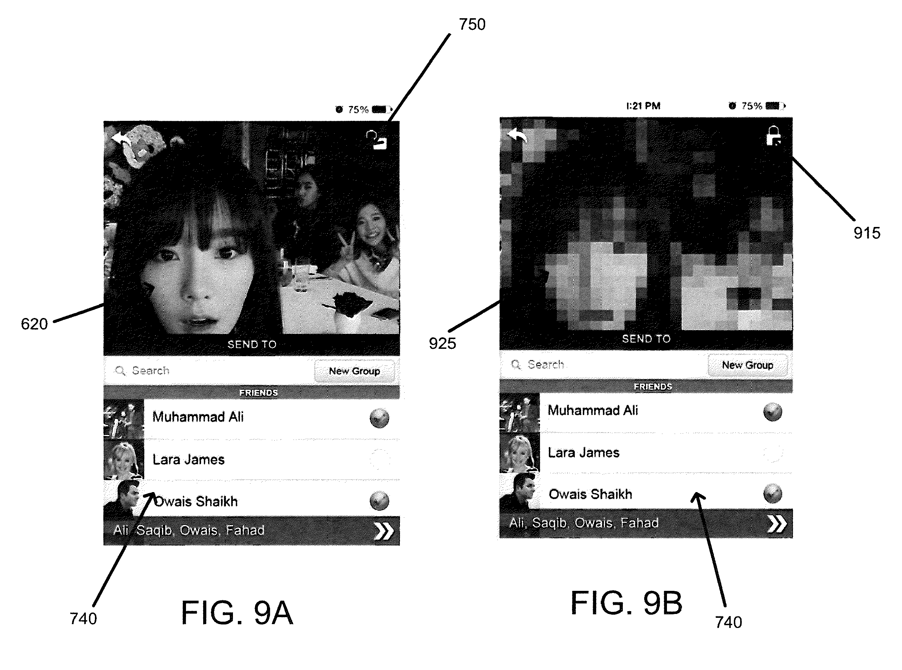

FIG. 9A and FIG. 9B show a security feature in accordance with aspects of the present invention. As shown in FIG. 9A, the device is displaying image 620 and messaging application 740. Further, the display shows security icon 750. By selecting security icon 750, image 620 is converted to a pixilated image 925 as shown in FIG. 9B. Security icon 750 also changes to a lock mode 915, which indicates that a secure message has been sent. Alternatively, the user can press down on the photo in a particular manner, swipe the photo in a particular manner, or tap on the phone in a particular manner to pixilate the image. In embodiments, image 925 can be viewed in the pixilated state by all the social connections in the current session; however, certain social connections can see the photo in an unpixilated sate as already described herein. For example, the social connections which are provided with a check mark, e.g., Muhammad Ali and Owais Shaikh, may have been provided with permissions to see the unpixilated photo.

Accordingly, the user can send image 925 to one of the social connections in a pixilated (blurred) state using messaging application 740. The photo can be unpixilated by an intermediate device, e.g., a sharing server, that then sends the image to another device with permissions. The user's device can send this message directly to another device which has permissions or with a password to perform any other action to un-pixilate the image. The pixilated photo can also be sent to a centralized server, where the authorized recipient can retrieve the image in an unpixilated state.

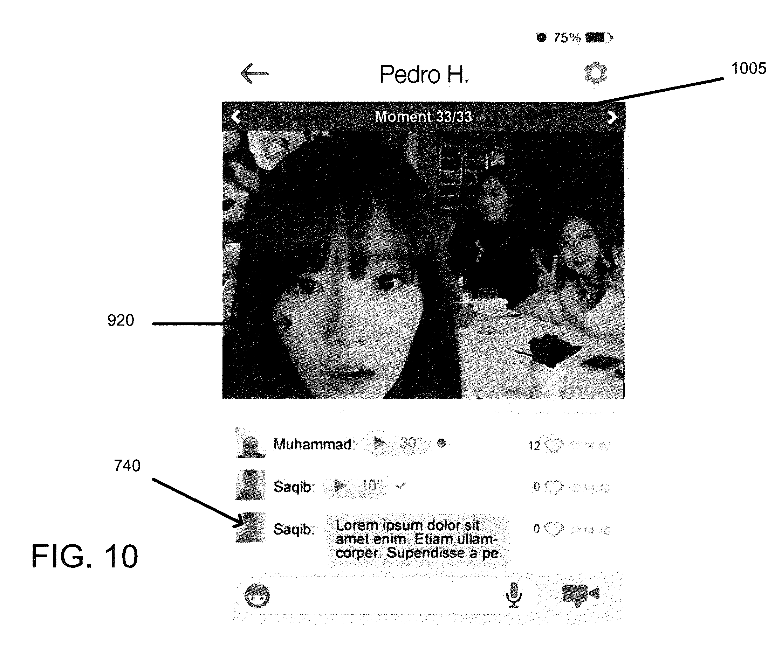

In FIG. 10, image 920 is stored in accordance with aspects of the present invention. In embodiments, image 920 can be stored as part of a library of photos, either on the device or remotely on a server. As shown in FIG. 10, status bar 1005 indicates that image 920 is "Moment 33/33," which illustrates that image 920 is the 33^{rd} image within a library of 33 images. This illustrates a particular photo and the number of photos in a sequence of photos. In embodiments, status bar 1005 can be used by the user to switch from one image to another image. Further, as shown in FIG. 10, messaging application 740 is shown on the bottom portion of the display. In embodiments, any of the images can be shared with one of the social connections through messaging application 740 by selecting (e.g., tapping) the image and swiping the connection. In embodiments, the photo can be of a higher quality and can be displayed on a page alongside with another application, e.g., messaging application 740.

Also, in embodiments, image 920 can be viewed by other devices at the same time it is being displayed along with messaging application 740. For example, since image 920 is stored within a library of images, the library of images may be available to a sharing server that can share any of images in the library with other devices. Thus, the device can request a sharing server, e.g., sharing server shown in FIG. 1, to share the image with those social connections currently using messaging application 740. The device may have a sharing module that interfaces with the messaging application in order to: (i) retrieve identification information of any the social connection; (ii) initiate a message to the identified social connection; and/or (iii) send the image and the message to the identified social connection. Accordingly, the sharing server can send the image to those social connections that are communicating with the user via messaging application 740.

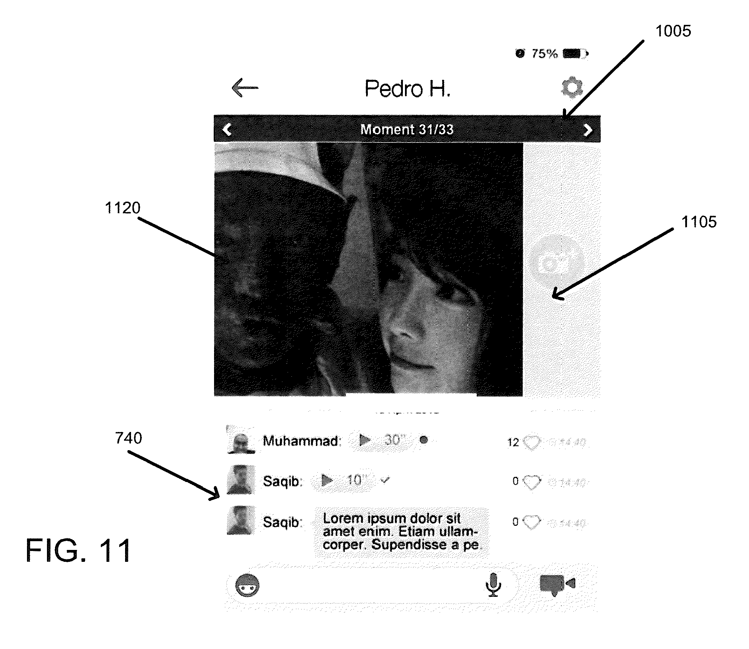

FIG. 11 shows a camera mode display, with status bar 1005, image 1120, sidebar 1105, and messaging application 740. As previously described, image 1120 may be one of multiple images stored by the device. In embodiments, the user can initiate an action (e.g., touching a particular area of the screen, swiping the screen left to right (or top to bottom), tapping the screen a particular number of times, etc.) to actuate sidebar 1105. Alternatively, sidebar 1105 may appear once the user has reached the last photo/video in the library through a series of motions (e.g., swiping motions). In embodiments, sidebar 1105 shows a camera icon, which allows the user to take and/or add additional photos/videos to the associated library of images. Alternatively, the camera icon can be provided on a full display after the last photo has been "swiped."

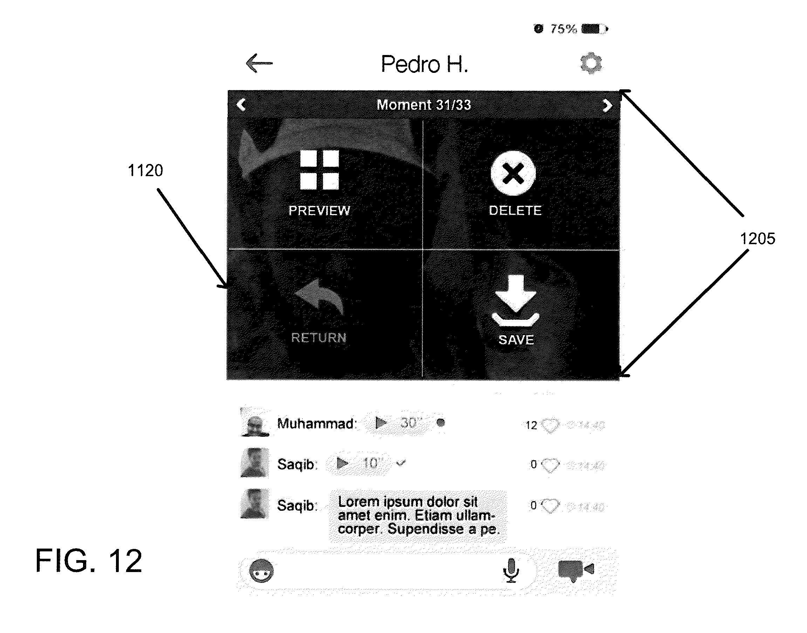

FIG. 12 shows a split window mode within menu screen 1205. In embodiments, menu screen 1205 can be placed over image 1120. In embodiments, menu screen 1205 can be selected by touching or swiping the screen in a particular manner (e.g., the user swipes down on the photo, swipes up on the photo, swipes to the right on the photo, etc.). Menu screen 1205 can include many different functions including: (i) a preview screen to preview a particular image prior to sending/displaying; (ii) a delete screen to delete an image; (iii) an exit or return screen; and/or (iv) a save screen to save the image, i.e., either on the device itself or sending the image to some other application or other device.

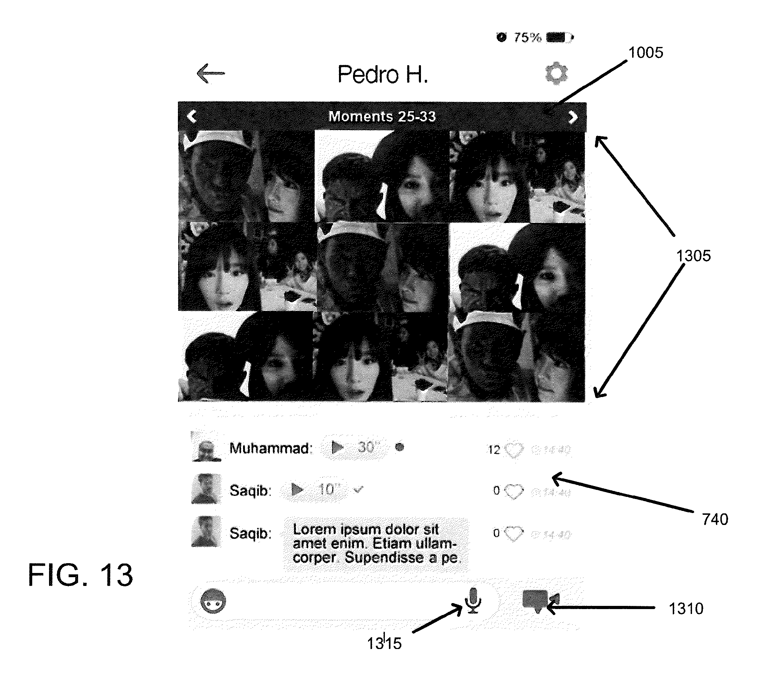

FIG. 13 shows an example of a preview screen in accordance with aspects of the present invention. In particular, FIG. 13 shows status bar 1005, thumbnail images 1305, and comment icon 1310. By using the thumbnail images, the user can display and select different images for sending to a recipient. As shown in FIG. 13, status bar 1005 shows moments 25 of 33 which illustrates that nine images, 25 to 33, are displayed at the same time on the same display. In embodiments, the user can share all or any combination of the images shown in FIG. 13 by selecting the images and then swiping one of the social connections in messaging application 740. Additionally, the user has the ability to record voice messages or other types of sound messages by selecting sound icon 1315. The sound message can be automatically attached to any image upon the user selecting one of the social connection (e.g., Saqib) in messaging application 740. In embodiments, the user has the ability to change the volume level of the sound message by increasing or decreasing the sound. Furthermore, the user has the ability to cancel the sound message by selecting a cancel option that is provided by sound icon 1315.

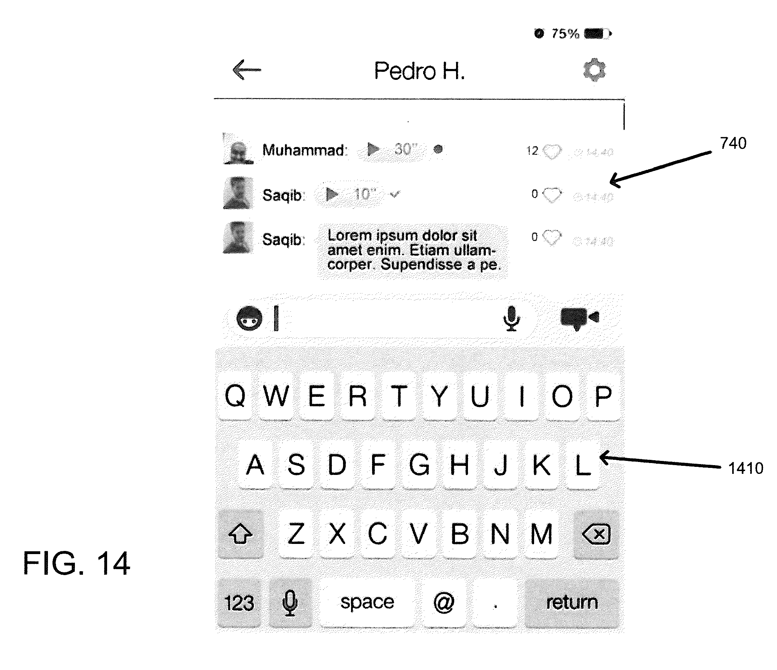

FIG. 14 shows an example text messaging display in accordance with aspects of the present invention. In FIG. 14, messaging application 740 includes keyboard 1410 in order to send a text message to a social connection along with the image.

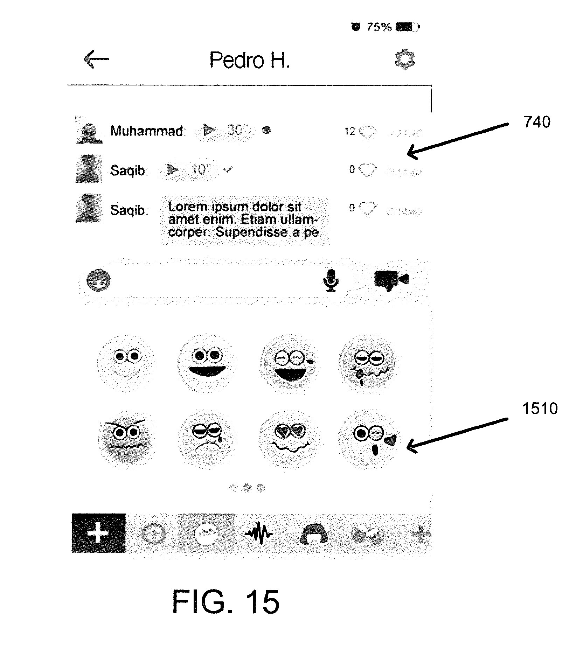

FIG. 15 shows an example icon display screen in accordance with aspects of the present invention. In FIG. 15, messaging application 740 includes sticker icons 1510. In embodiments, sticker icons 1510 are associated with one or more different types of images (e.g., happy face, sad face, crying face, etc.), as well as icons that represent sounds and/or other actions that can be attached to a message when sent to one of the social connections shown in messaging application 740. For example, a user may have an image of people laughing that the user would like to share with a social connection. Thus, the user can select a happy face and also a laughing sound from sticker icons 1510, and attach those features to a message when sending the image. This allows a user to enhance their social activity with friends, family, or other individuals by attaching different sound and image features along with a video and/or photo.

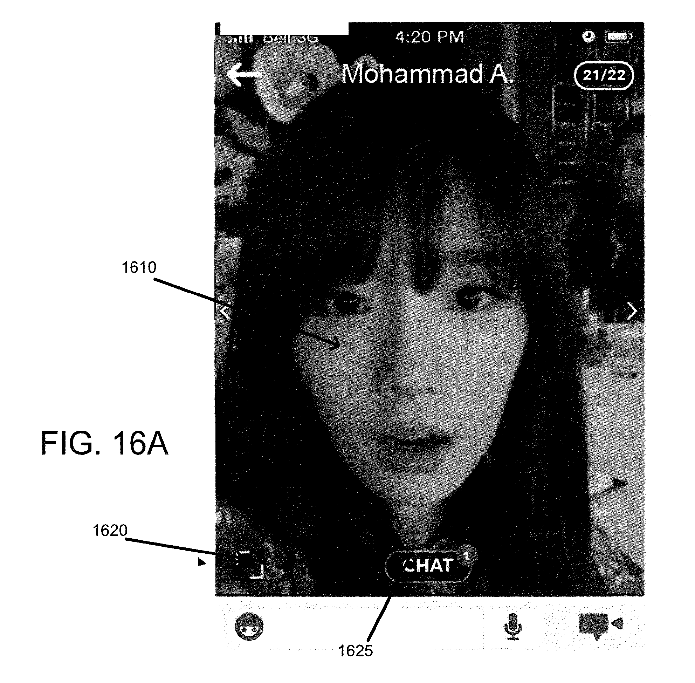

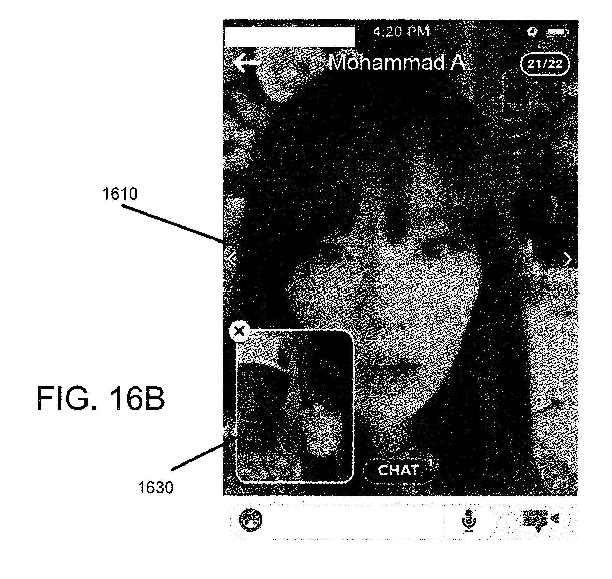

FIG. 16A shows image 1610, icon 1620, and chat icon 1625. In embodiments, image 1610 may be a photo that the user has retrieved from their photo collection and is viewing on the device. As shown, image 1610 is the 21^{st} image out of a library of 22 images. Icon 1620 allows the user to bring up a video chat screen, as an insert (see FIG. 16B). In embodiments, chat icon 1625 allows the user to access a chatting application, such as messaging application 740. By selecting chat icon 1625, a chat application will appear on the screen as already described herein.

FIG. 16B shows image 1630 displayed within image 1610, upon selecting icon 1620. In embodiments, image 1630 can be provided from a camera feature that allows the user to activate a picture-in-picture display. In embodiments, image 1630 can be a video chat conversation associated with another application or device. Alternatively, image 1630 can be a photo or video. Alternatively, image 1630 can be a live camera feed. With one click sharing (e.g., one user action), a user is able to add a photo or video into a conversation with just a single action (e.g., a tap on the touch screen of the device), and, if a message application is already in session, allows the insert picture to be broadcast to the other users in the social network.

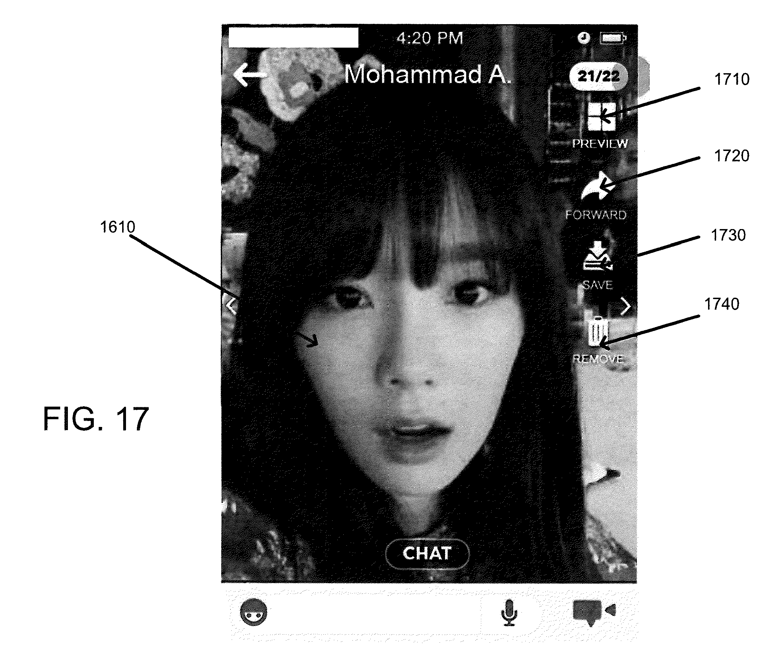

FIG. 17 shows a side display bar in accordance with aspects of the present invention. In FIG. 17, the side display bar includes icons 1710, 1720, 1730, and 1740. In embodiments, icon 1710 is a preview icon, to preview images as described herein, e.g., thumbnails, etc. In embodiments, icon 1720 is a forward icon which allows the user to forward the image to another application used on the device and/or forward the image to another device, e.g., for storing the image. In embodiments, icon 1730 is a save icon which allows the user to save the image in a library of images, either on the device or a remote storage device. In embodiments, icon 1740 allows the user to remove/delete the image.

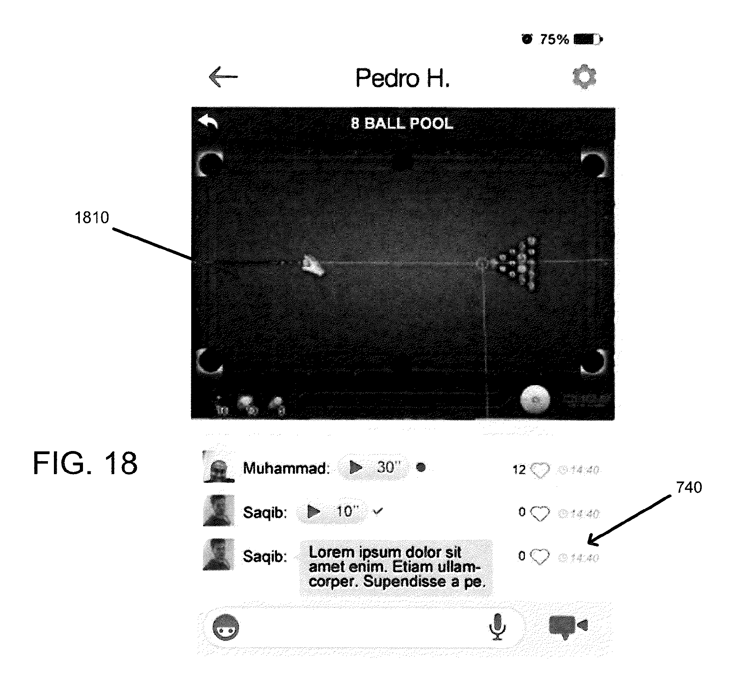

FIG. 18 shows an example gaming screen in accordance with aspects of the present invention. In particular, FIG. 18 shows game 1810 and messaging application 740. In this embodiment, game 1810 can be a gaming application displayed and shared with other users in social networks, while communicating through messaging application 740. In embodiments, the user can either select the gaming application before the messaging application is displayed or vice versa. Thus, the user has the capability to share other types of content, e.g., games, while also communicating with other users through messaging application 740. Game 1810 can be any game, such as billiards. This application allows the game to be played by different users, on different devices, while providing communication functionality. In this example, Saqib may already be logged into the gaming application server or connected to the device with the game, and thus when the user displays game 1810, Saqib is already a part of the gaming session. Alternatively, the user can initiate an invite via messaging application 740 and send a message along with a link or other type of connection that allows for one of the user's social connections to join the user and play the game simultaneously. Thus, in one implementation, the game and the messaging are two separate applications that can be displayed at the same time.

In alternate embodiments, the game and the messaging may share the same security and access functions. Thus, when the user selects a friend from messaging application 740, the selection results in a session that permits the friend to access and play the game along with the user. As such, the gaming application and the messaging application information can be combined together by sharing server that then sends both types of information as one stream of information to the device.

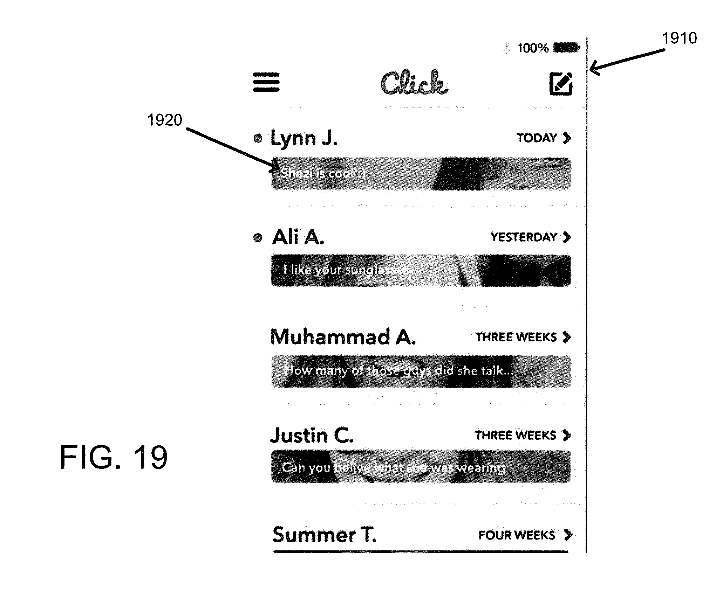

FIG. 19 shows a home menu page in accordance with aspects of the present invention. In embodiments, home page 1910 for a particular user includes a list of messages received from the user's friends, such as message 1920. As shown, message 1920 includes a partial display of the image and text sent by the user's friend, Lynn J. In this way, the user can easily discern which friend sent a recent message including both text and image.

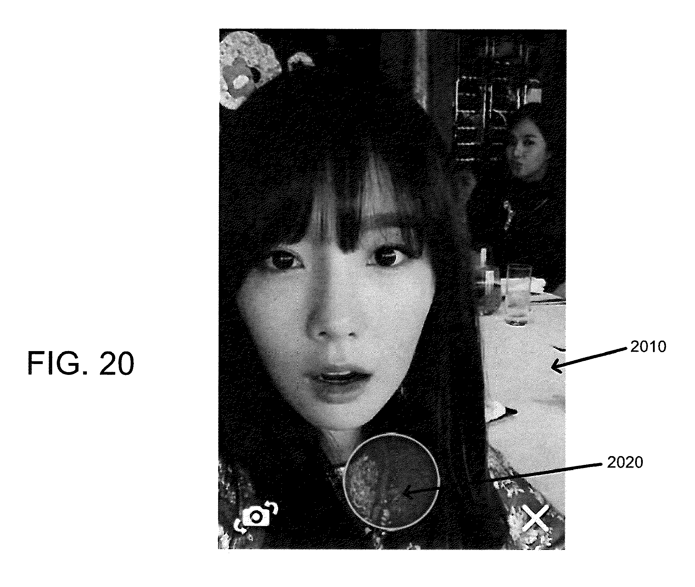

FIG. 20 shows image 2010 which is provided by a device camera. In embodiments, image 2010 includes icon 2020, which can be used by the user to determine which portion of the image is to be displayed on the device screen. In embodiments, the user can use icon 2020 in conjunction with touch screen technology to rotate the displayed image or otherwise make manipulations.

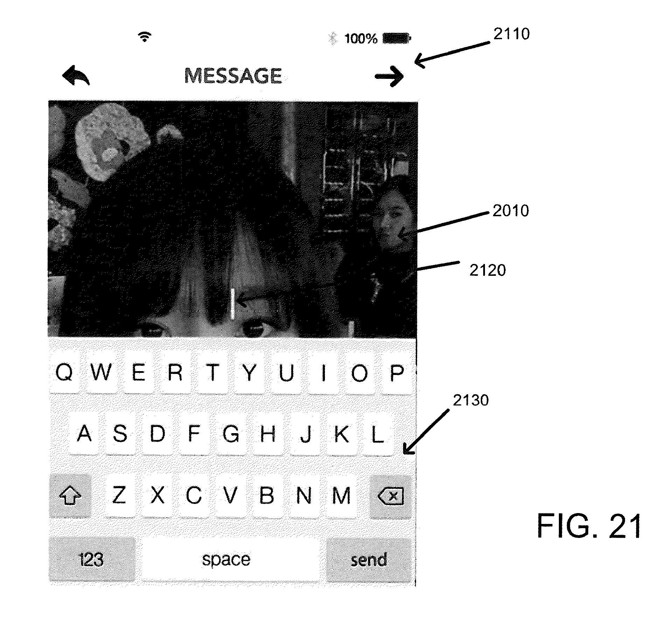

FIG. 21 represents a message being created within image 2010 in accordance with aspects of the present invention. As shown, as the user selects to create a message, message display 2110 appears as the header on the display screen along with image 2010. Prompt 2120 then appears over the image allowing the user to enter a message directly overlaid onto image 2010. Additionally, keypad 2130 can pop-up onto the display screen, which allows the user to enter text using prompt 2120.

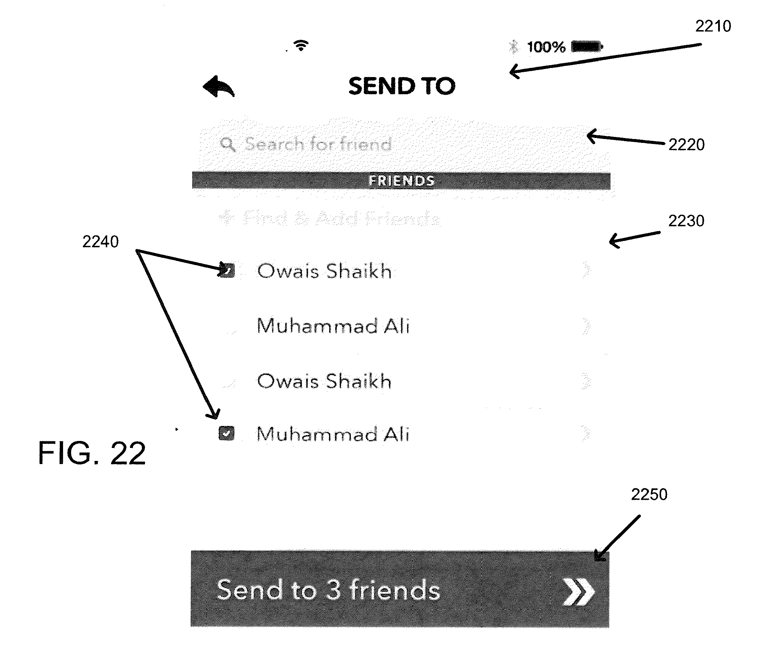

FIG. 22 represents a screenshot of sending a message to friends in accordance with aspects of the present invention. As shown, the user can select send 2210 in order to send an image with text to any user, within a list of users 2230. Send to screen 2210 allows the user to search for a friend by using search icon 2220. The user can use select buttons 2240 to select friends and use send button 2250 to send the message to the selected friends.

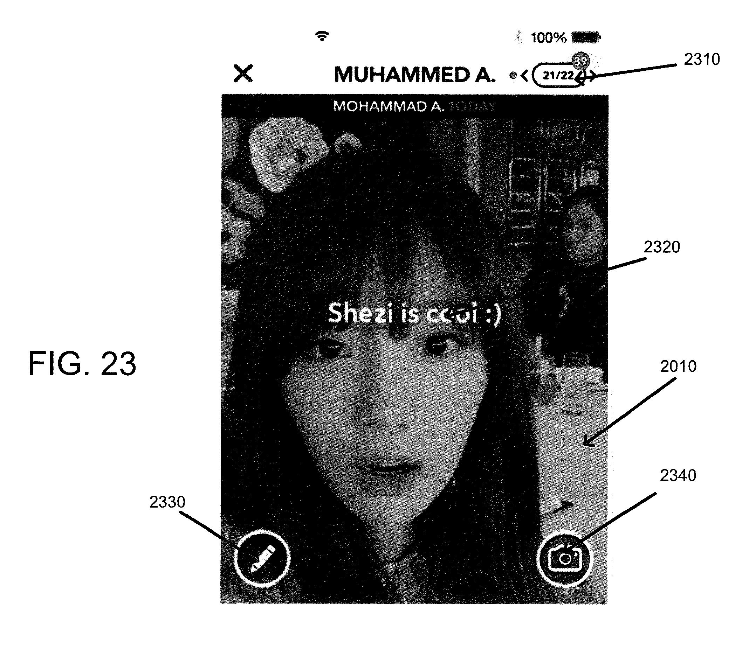

FIG. 23 shows image 2010 with text message 2320 overlaid directly on image 2010. As shown, the friend (e.g., Muhammad A.) can view image 2010 and text message 2320 on display 2310. Further, reply button 2330 can be used to create textual, audio, and/or visual messages that can be embedded into image 2010. In accordance with aspects of the invention, the reply button 2230 allows a user to reply to a picture message with just a new text or a new picture message. This can be accomplished by cloning the existing photo (image) and embedding the new text message onto it. Technically, this is accomplished by simply calling the same photo, so it reduces bandwidth and storage, while giving the user the impression that the photo has been copied. In this way, the text can be sent without resending an image. In embodiments, camera button 2340 can be used to bring up a mini-cam size image as shown in FIG. 5.

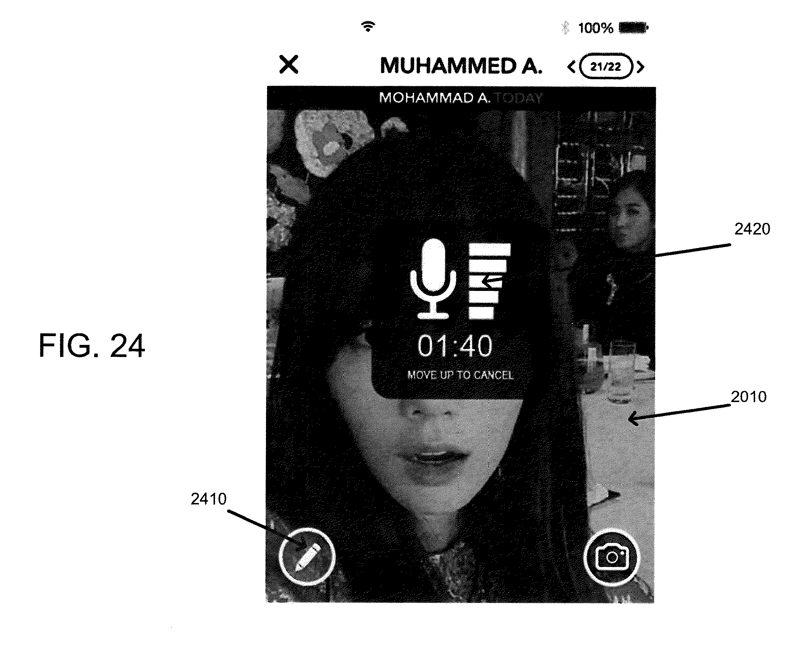

FIG. 24 shows audio message created by using reply button 2330 within image 2010 in accordance with aspects of the present invention. As shown, when the user selects reply 2410 (e.g., by pressing down for a period of time, such as two seconds, five seconds, etc., swiping, touching, etc.), the user can then being recording an audio message 2420 which will be displayed within image 2010 on a receiving device.

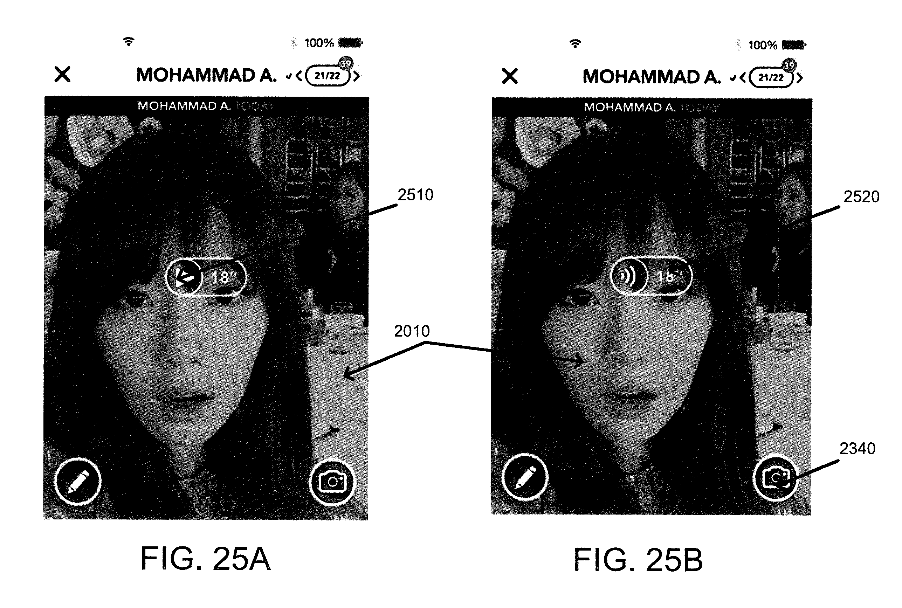

FIGS. 25A and 25B represent an audio message embedded with the image in accordance with aspects of the present invention. As shown in FIG. 25A, play button 2510 within image 2010 allows the user to select the message for play. In embodiments, play button 2510 can include information, such as time of play (e.g., 18 seconds, minutes, etc.), type of message, and/or other types of information. FIG. 25B represents the audio message being played, once play button 2510 is selected. In embodiments, symbol 2520 can be selected by the user to increase or decrease the sound, stop the message, rewind, fast forward, or pause the message, for example.

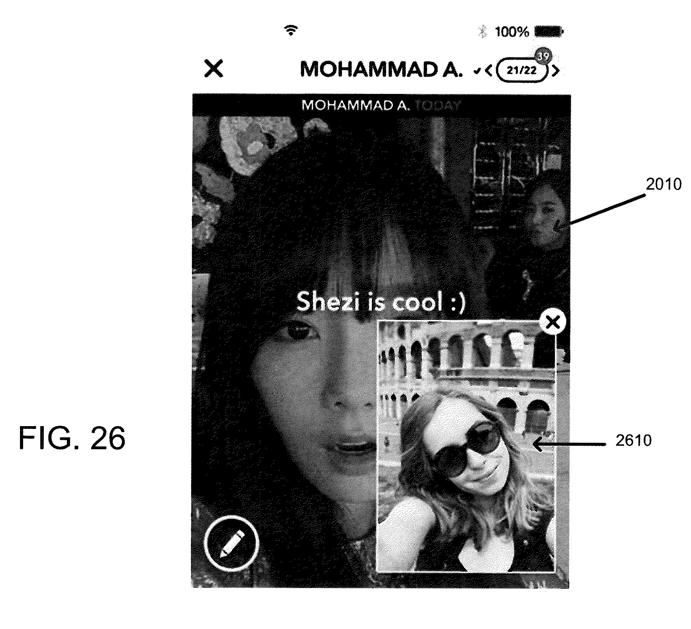

FIG. 26 shows mini-cam image 2610 inserted within image 2010 in accordance with aspects of the present invention. Mini-cam image 2610 can be actuated by selecting and holding camera icon 2340 as shown in FIG. 25B. Once selected, mini-cam image 2610 can be viewed along with image 2010 and can be used by the user to send this image as a response to receiving image 2010.

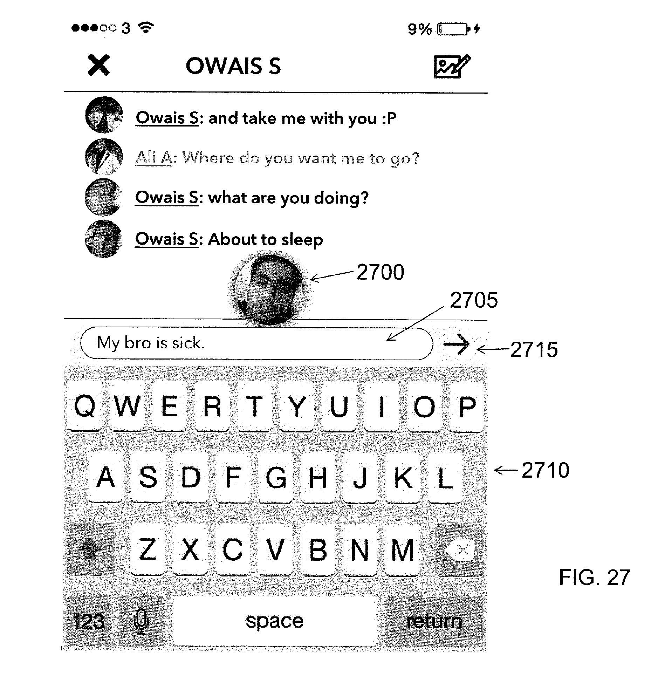

FIGS. 27- 29 show a sequence of screen shots representative of a text mode design and user interface with minicam, which emphasizes one click photo messaging and one click video messaging in accordance with aspects of the present invention. In particular, by implementing the aspects of the present invention, a user can take a selfie (e.g., photo or video), prepare a text message and send both the selfie and the text message using a single click action. Accordingly, in this implementation, the camera (e.g., minicam) can be activated from within a conversation page.

In particular, as shown in FIG. 27, a conversation between two individuals, Ali. A. and Owais S. is taking place, where Owais S. is currently taking a selfie 2700 of himself. In this implementation, the messaging application of the present invention allows the user to use the minicam as a live camera that allows the user to take a selfie 2700 or pose (or view), while also adding a text message. In embodiments, the selfie 2700 is attached to text field 2705 which is populated using the keyboard 2710. In embodiments, the keyboard can be pulled up by a simple click within the text field 2705.

As further shown in FIG. 27, as soon as the user clicks, e.g., arrow 2715, (or other button, e.g., return key), the minicam will capture the user's expression (e.g., selfie 2700) at the moment and attach it to the text message. In this way, with a single click action, the messaging application will capture the selfie 2700 and send the selfie 2700 and text message 2705, e.g., photo messaging, to the conversation page. In embodiments, this feature can be used in a group messaging session with multiple users. This, in turn, enables private one click photo or video messaging to a group.

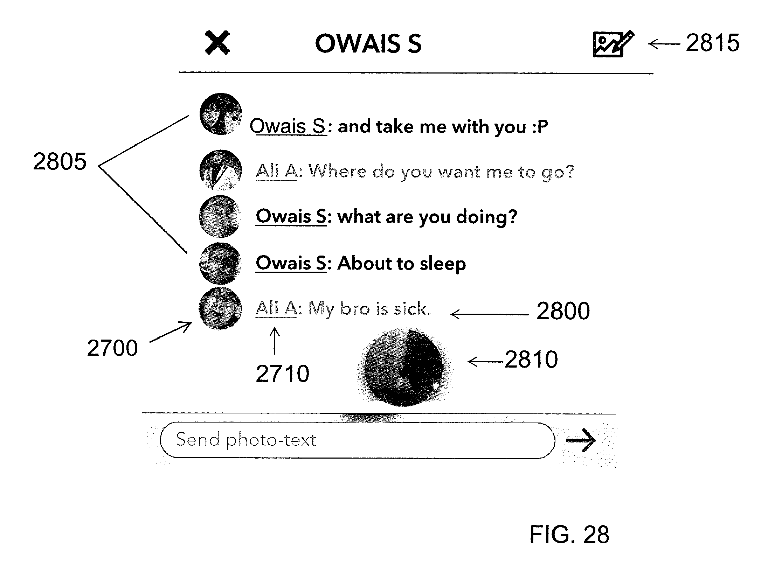

As shown in FIG. 28, the expression, e.g., selfie 2700, and text message 2705 can then be shown in the message field (conversation page) 2800, with other selfies and texts generally represented at reference numeral 2805. In further embodiments as shown in FIG. 28, the user can click on the minicam to flip the camera as shown representatively at reference numeral 2810. In still additional embodiments, the user can click on either the mini picture, e.g., selfie, or a photomode switcher 2815 in order to open the picture as shown in FIG. 20. In embodiments, text 2900 associated with the picture 2905 can be superimposed on the picture 2905.

Illustrative, non-exclusive examples of apparatus and methods according to the present disclosure are presented in the following enumerated paragraphs. It is within the scope of the present disclosure that an individual step of a method recited herein, including in the following enumerated functions below and herein, may additionally or alternatively be referred to as a "step for" performing the recited action. Accordingly, it should be understood that the invention can be implemented in many different combinations and variations noted herein. The many features/functions of each of the different screen displays, for example, can be displayed and its functionality used in any number of different configurations. For example, the present invention can be a method implemented in a computing device, comprising: displaying content on a screen; selecting the content for sharing on at least one other computing device, by performing a first user action; and sending the content to the at least one other computing device by performing a second user action. The method further includes, in any combination, the first user action is a tapping action on the content and the second user action is a swiping motion of a connection associated with the at least one other computing device. The method further includes, in any combination, the content is a photo or a video to be shared with one or more recipients associated with the at least one other computing device. The method further includes, in any combination, the sending is to one or more connections associated with the at least one other computing device and which is part of a social network of a sender. The method further includes, in any combination, the content is provided on the screen of the computing device with another application. The method further includes, in any combination, the another application is a chat application, which includes a listing of the one or more recipients to be swiped. The method further includes, in any combination, the display of the computing device is a split screen display. The method further includes, in any combination, the computing device has the capabilities of using at least two cameras without individually activating each one. The method further includes, in any combination, the least two cameras are used simultaneously and content associated with the least two cameras is provided in a split screen format on the split screen display. The method further includes, in any combination, the user selects any content from the split screen format by a single action. The method further includes, in any combination, the computing device is provided with a preview screen, which any combination of images is selectable for sending in accordance with the steps of claim 1 or any combination of claims. The method further includes, in any combination, providing security to the content by pixilation of the content. The method further includes, in any combination, the the one or more recipients are provided with permissions or a password to receive un-pixelated content. The method further includes, in any combination, being implemented in a computer infrastructure having computer executable code tangibly embodied on a computer readable storage medium having programming instructions operable to perform the steps/functions disclosed herein. The method further includes, in any combination, being implemented in a computer program product comprising a computer readable storage medium having program code embodied in the storage medium, the program code readable/executable by a computing device to perform the steps/functions disclosed herein. The method further includes, in any combination, a system comprising a CPU, a computer readable memory and a computer readable storage medium, and program instructions to implement the steps of claim 1 or any combination of claims, wherein the program instructions are stored on the computer readable storage medium for execution by the CPU via the computer readable memory. The method further includes, in any combination, the content is a game. The method further includes, in any combination, the content is saved on the computing device or a server. The method further includes, in any combination, the content is sent to the the at least one other computing device through a central server. The method further includes, in any combination, the content can be sent with a chat session on a same or separate channel. The method further includes, in any combination, the content is sent to a central server and then to the the at least one other computing device, with or without any merged applications including a chat function to be displayed with the content on the the at least one other computing device.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A method implemented in a computing device, comprising activating a camera directly from a messaging session on the computing device, and sending an image to one or more recipients on at least one other computer device, directly from the messaging session.

2. The method of claim 1, wherein the camera is activated directly from within a conversation page, and further comprising a one click action to send both a selfie and a text message from within the conversation page.

3. The method of claim 1, further comprising enabling group messaging utilizing the camera which enables private one click photo or video messaging to a group.

4. The method of claim 1, further comprising:
providing selectable content on the computing device for sharing on the at least one other computing device by a first user action; and
sending the content to the at least one other computing device by a second user action, directly from the messaging session,
wherein the first user action is a tapping action on selected content and the second user action is a swiping motion of a connection associated with the at least one other computing device,
wherein the selectable content is the photo or a video to be shared with the one or more recipients associated with the at least one other computing device, and
wherein the sending is to one or more connections associated with the at least one other computing device and which is part of a social network of a sender.

5. The method of claim 4, wherein the messaging session is a chat application, which includes a listing of the one or more recipients to be swiped such that the selectable content can be sent to any of the one or more recipients associated with the at least one other computing device, while viewing the content thereon.

6. The method of claim 1, further comprising providing a user an ability of using at least two cameras without individually activating each one, wherein the least two cameras are used simultaneously and content associated with the least two cameras is provided in a split screen format on the split screen display and is the content which is selectable to be sent to the at least one other computing device, and wherein any content from the split screen format is selectable by a single action and sent by another single action.

7. The method of claim 1, wherein the computing device is provided with a preview screen, which any combination of images is selectable for sending in accordance with the steps of claim 1.

8. The method of claim 4, further comprising providing security to the content by pixilation of the content and one or more recipients are provided with permissions or a password to receive un-pixelated content, wherein the content includes a message that is embedded into an image and which can be sent to a recipient's device without resending the image from a sending device, and the message includes at least one of a text message, a video message, and an audio message.

9. The method of claim 1, wherein the computing device is a wearable device.

10. The method of claim 4, wherein the selectable content is a mini-cam image in a larger image.

11. A computer program product for sharing content, the computer program product comprising a computer usable storage medium program code embodied in a storage medium, the program code is readable/executable by a computing device to:
display the content on a device screen;
select the content for sharing to another device, by a first action; and
send the content to the another device by a second action,
wherein the sending and the sharing of the content requires no additional actions other than the first action and the second action and the displaying, selecting and sending is provided in a single application interface.

12. The computer program product of claim 11, wherein the content is an image and the program code is readable/executable by a computing device to enter a message onto the image and send the message to the another device within the single application interface, wherein the user of the another device views the message over the image without the image having to be resent.

13. The computer program product of claim 12, wherein the content is sent to the another device through a central server.

14. The computer program product of claim 13 is a mobile application implemented in a computing device, operable to perform the functionality of claim 19.

15. A system comprising:
a CPU, a computer readable memory and a computer readable storage medium;
program instructions to select a device camera for taking of an image, while within a messaging session generated by a the device camera;
program instructions to select the image for sharing by using a first user action, while within the messaging session; and
program instructions to send the image to another device by using a second user action, while within the messaging session, wherein:
the selecting and sharing of the image requires only the first user action and the second user action while the messaging session is active and displayed
the program instructions are stored on the computer readable storage medium for execution by the CPU via the computer readable memory, and
the image is displayed within the message session with text or during a chat session and which can be sent to the another device using the second user action during the messaging session.
